(19) **Europäisches Patentamt / European Patent Office / Office européen des brevets**

(11) **EP 4 738 740 A1**

(12) **EUROPEAN PATENT APPLICATION**
published in accordance with Art. 153(4) EPC

(43) Date of publication:
**06.05.2026   Bulletin 2026/19**

(21) Application number: **23942994.7**

(22) Date of filing: **30.06.2023**

(51) International Patent Classification (IPC):
**H04L 1/08** (2006.01)

(52) Cooperative Patent Classification (CPC):
**H04L 1/08**

(86) International application number:
**PCT/CN2023/105058**

(87) International publication number:
**WO 2025/000498 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **CUI, Shengjiang**
**Dongguan, Guangdong 523860 (CN)**

(74) Representative: **Mewburn Ellis LLP**
**Aurora Building**
**Counterslip**
**Bristol BS1 6BX (GB)**

(54) **TRANSMISSION METHOD, FIRST TERMINAL AND NETWORK DEVICE**

(57)    The present application relates to a transmission method, a first terminal, a network device, a chip, a computer-readable storage medium, a computer program product, a computer program and a communication system. The transmission method comprised: after using a first transmission mode to transmit a first message for the first time, a first terminal using a second transmission mode to retransmit the first message, wherein the second transmission mode is different from the first transmission mode. By means of the embodiments of the present application, the data transmission performance can be improved.

A first terminal after performing an initial transmission of a first message by using a first transmission mode, retransmits the first message by using a second transmission mode — S710

**FIG. 7**

Processed by Luminess, 75001 PARIS (FR)

## Description

### TECHNICAL FIELD

The present disclosure relates to the field of communications, and more specifically, to a transmission method, a first terminal, a network device, a chip, a computer-readable storage medium, a computer program product, a computer program, and a communication system.

### BACKGROUND

A basic purpose of communications is to complete a task of delivering and exchanging information timely and accurately, and thus, transmission performance is particularly important in communication systems. In order to improve the transmission performance, when message sending fails, a data retransmission may be attempted. It is necessary to consider how to improve a probability of transmitting data correctly when the retransmission.

### SUMMARY

Embodiments of the present disclosure provide a transmission method, including:
retransmitting, by a first terminal after performing an initial transmission of a first message by using a first transmission mode, the first message by using a second transmission mode; where the second transmission mode is different from the first transmission mode.

Embodiments of the present disclosure provide a transmission method, including:
receiving, by a network device after receiving an initial transmission of a first message from a first terminal using a first transmission mode, a retransmission of the first message from the first terminal using a second transmission mode; where the second transmission mode is different from the first transmission mode.

Embodiments of the present disclosure provide a first terminal, including:
a first communication module, configured to, after performing an initial transmission of a first message by using a first transmission mode, retransmit the first message by using a second transmission mode; where the second transmission mode is different from the first transmission mode.

Embodiments of the present disclosure provide a network device, including:
a second communication module, configured to receive, after receiving an initial transmission of a first message from a first terminal using a first transmission mode, a retransmission of the first message from the first terminal using a second transmission mode; where the second transmission mode is different from the first transmission mode.

Embodiments of the present disclosure provide a first terminal, including a processor and a memory. The memory is configured to store a computer program, and the processor is configured to call and run the computer program stored in the memory, so that the first terminal performs the above-mentioned transmission method.

Embodiments of the present disclosure provide a network device, including a processor and a memory. The memory is configured to store a computer program, and the processor is configured to call and run the computer program stored in the memory, so that the network device performs the above-mentioned transmission method.

Embodiments of the present disclosure provide a chip, configured to implement the above-mentioned transmission methods.

Specifically, the chip includes: a processor, configured to call and run a computer program from a memory to cause a device equipped with the chip to perform the above-mentioned transmission methods.

Embodiments of the present disclosure provide a computer-readable storage medium, configured to store a computer program, and the computer program, when run by a device, causes the device to perform the above-mentioned transmission methods.

Embodiments of the present disclosure provide a computer program product, including computer program instructions, and the computer program instructions cause a computer to perform the above-mentioned transmission methods.

Embodiments of the present disclosure provide a computer program that, when running on a computer, causes the computer to perform the above-mentioned transmission methods.

Embodiments of the present disclosure provide a communication system, including a first terminal and a network device configured to perform the above-mentioned transmission methods.

In the embodiments of the present disclosure, the first terminal, after performing an initial transmission of a first message, retransmits the first message by using a second transmission mode different from a first transmission mode for the initial transmission, so that the probability of transmitting data correctly during the retransmission may be improved, thereby improving data transmission performance.

## BRIEF DESCRIPTION OF THE DRAWINGS

FIG. 1 is a schematic diagram of a communication system according to the embodiments of the present disclosure.
FIG. 2 is a schematic diagram of a zero-power consumption communication network.
FIG. 3 is a schematic diagram of radio frequency power harvesting.
FIG. 4 is a schematic diagram of a backscatter communication.
FIG. 5 is a schematic diagram of resistance load modulation.
FIG. 6 is a schematic diagram of power control of a PRACH.
FIG. 7 is a schematic flowchart of a transmission method according to an embodiment of the present disclosure.
FIG. 8 is a schematic flowchart of a transmission method according to another embodiment of the present disclosure.
FIG. 9A is a schematic diagram of a first time window for listening to a response message in the embodiments of the present disclosure.
FIG. 9B is a schematic diagram of a first time-domain position for listening to a response message in the embodiments of the present disclosure.
FIG. 9C is a schematic diagram of a retransmission in a case where no response message is listened to in a first time window in the embodiments of the present disclosure.
FIG. 9D is a schematic diagram of a retransmission in a case where no response message is listened to at a first time-domain position in the embodiments of the present disclosure.
FIG. 10A is a schematic diagram of a second time window for listening to a second message in the embodiments of the present disclosure.
FIG. 10B is a schematic diagram of a second time-domain position for listening to a second message in the embodiments of the present disclosure.
FIG. 10C is a schematic diagram of a retransmission in a case where a second message is listened to in a second time window in the embodiments of the present disclosure.
FIG. 10D is a schematic diagram of a retransmission in a case where a second message is listened to at a second time-domain position in the embodiments of the present disclosure.
FIG. 11 is a schematic block diagram of the first terminal according to an embodiment of the present disclosure.
FIG. 12 is a schematic block diagram of a first terminal according to another embodiment of the present disclosure.
FIG. 13 is a schematic block diagram of a first terminal according to yet another embodiment of the present disclosure.
FIG. 14 is a schematic block diagram of a first terminal according to yet another embodiment of the present disclosure.
FIG. 15 is a schematic block diagram of a network device according to an embodiment of the present disclosure.
FIG. 16 is a schematic block diagram of a communication device according to the embodiments of the present disclosure.
FIG. 17 is a schematic block diagram of a chip according to the embodiments of the present disclosure.
FIG. 18 is a schematic block diagram of a communication system according to the embodiments of the present disclosure.

## DETAILED DESCRIPTION

Technical solutions in the embodiments of the present disclosure will be described below in conjunction with the drawing in the embodiments of the present disclosure.

The technical solutions of the embodiments of the present disclosure may be applied to various communication systems, such as New Radio (NR) systems, Non-Terrestrial Networks (NTN) systems, Wireless Local Area Networks (WLAN), Wireless Fidelity (WiFi), fifth-generation communication (5th-Generation, 5G) systems, sixth-generation communication (6th-Generation, 6G) systems, or other communication systems, etc.

Generally speaking, traditional communication systems support a limited number of connections, which is also easy to be implemented. However, with the development of the communication technology, mobile communication systems will not only support traditional communications, but also support, for example, device to device (D2D) communication, machine to machine (M2M) communication, machine type communication (MTC), vehicle to vehicle (V2V) communication, or vehicle to everything (V2X) and other terminal-to-terminal direct communications, etc, and the embodiments of the present disclosure may be applied to these communication systems as well.

In an implementation, the communication system in the embodiments of the present disclosure may be applied to a carrier aggregation (CA) scenario, a dual connectivity (DC) scenario, and may also be applied to a standalone (SA) network deployment scenario.

In an implementation, the communication system in the embodiments of the present disclosure may be applied to an unlicensed spectrum, where the unlicensed spectrum may also be considered as a shared spectrum. Alternatively, the communication system in the embodiments of the present disclosure may be applied to a licensed spectrum, where the licensed spectrum may be considered as an unshared spectrum.

The embodiments of the present disclosure describe various embodiments in conjunction with a network device and a terminal device, where the terminal device may also be referred to as user equipment (UE), an access terminal, a user unit, a user station, a mobile station, a mobile platform, a remote station, a remote terminal, a mobile device, a user terminal, a terminal, a wireless communication device, a user agent, or a user apparatuse, etc.

The terminal device may be station (STATION, ST) in a WLAN, a cellular phone, a cordless phone, a session initiation protocol (SIP) phone, a wireless local loop (WLL) station, a Personal Digital Assistant (PDA) device, a handheld device with a wireless communication function, a computing device or another processing device connected to a wireless modem, a vehicle-mounted device, a wearable device, a terminal device in a next-generation communication system such as an NR network, a terminal device in a future evolved public land mobile network (PLMN) network, or the like.

In the embodiments of the present disclosure, the terminal device may be deployed on land, including indoor or outdoor, handheld, wearable, or in-vehicle; the terminal device may also be deployed on water (e.g., on a steamship, etc.) or underwater (such as a submarine, etc.); the terminal device may also be deployed in air (e.g., on an airplane, on a balloon, or on a satellite, etc.).

In the embodiments of the present disclosure, the terminal device may be a mobile phone, a pad, a computer with a wireless transceiver function, a virtual reality (VR) terminal device, an augmented reality (AR) terminal device, a terminal device in personal internet of things (PIoT), a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, etc.

As an example but not a limitation, in the embodiments of the present disclosure, the terminal device may also be a wearable device. The wearable device may be referred to as a wearable smart device, which is a general term for wearable devices developed by performing the intellectualized design on daily wear by applying wearable technologies, such as glasses, gloves, watches, clothing and shoes, etc. The wearable device is a portable device that is worn directly on a body, or integrated into the clothes or accessories of users. The wearable device is not only a hardware device, but also implements powerful functions by software support as well as data interaction or cloud interaction. Generalized wearable smart devices include devices, that are fully functional, large in size and may implement full or partial functions without relying on smart phones, such as smart watches or smart glasses; as well as devices, that only focus on a certain type of application function and need to be used in conjunction with other devices (e.g., a smart phone), such as various smart bracelets and smart jewelry that monitor physical signs, or the like.

In the embodiments of the present disclosure, the network device may be a device for communicating with a mobile device, and the network device may be an access point (AP) in the WLAN, or a relay station or an access point, or an in-vehicle device, a wearable device, a network device (gNB) in the NR network, a network device in the future evolved PLMN network, a network device in the NTN network, or the like.

As an example but not a limitation, in the embodiments of the present disclosure, the network device may have mobile characteristics. For example, the network device may be a mobile device. Optionally, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite, etc. Optionally, the network device may also be a base station disposed on land, water, or other places.

In the embodiments of the present disclosure, the network device may provide a service for a cell, and the terminal device communicates with the network device through a transmission resource (e.g., a frequency-domain resource, or in other words, a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell, or the like. These small cells have characteristics of small coverage ranges and low transmission power, which are applicable for providing a data transmission service with high speed.

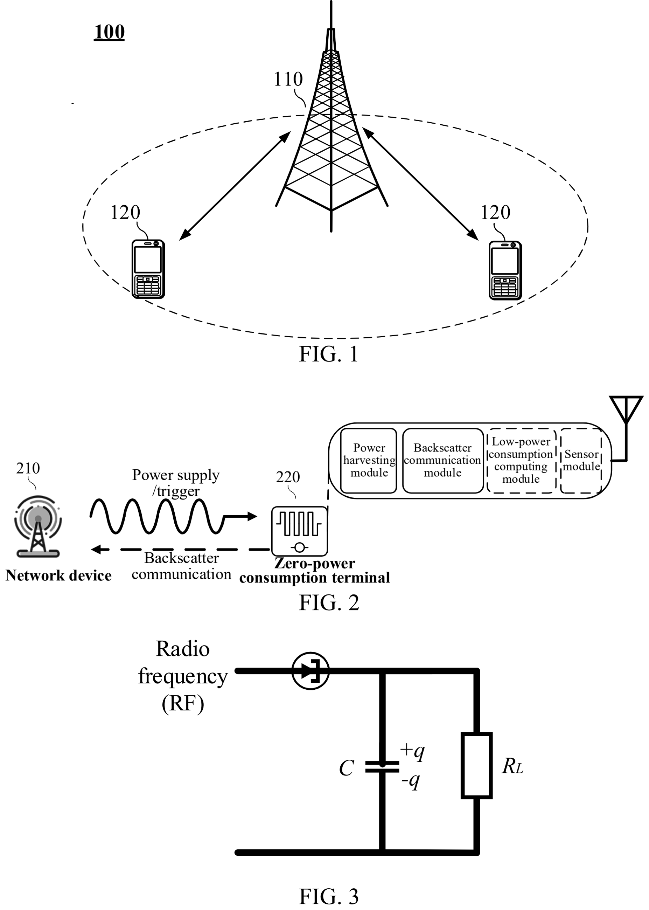

FIG. 1 exemplarily shows a communication system 100. The communication system includes a network device 110 and two terminal devices 120. In a possible implementation, the communication system 100 may include a plurality of network devices 110, each of which may have a coverage range in which other number of terminal devices 120 may be included, which is not limited in the embodiments of the present disclosure.

It should be understood that, in the embodiments of the present disclosure, a device with a communication function in the network/system may be referred to as a communication device. Taking the communication system shown in FIG. 1 as an example, the communication device may include a network device with a communication function and a terminal device with a communication function. The network device and the terminal device may be the specific devices in the embodiments of the present disclosure, which will not be repeated here. The communication device may further include other devices in the communication system, such as a network controller, a mobility management entity, and other network entities, which are not limited in the embodiments of the present disclosure.

In order to facilitate understanding of the embodiments of the present disclosure, basic procedures and basic concepts involved in the embodiments of the present disclosure are briefly described below. It should be understood that the basic procedures and basic concepts introduced below do not limit the embodiments of the present disclosure.

It should be understood that the terms "system" and "network" are often used interchangeably herein. The term "and/or" herein is only an association relationship to describe associated objects, indicating that there may be three kinds of relationships, and for example, "A and/or B" may represent three cases where: A exists alone, both A and B exist, and B exist alone. In addition, a character "/" herein generally indicates that the associated objects before and after this character are in an "or" relationship.

It should be understood that, "indicate/indicated/indicating/indication" mentioned in the embodiments of the present disclosure may mean a direct indication, an indirect indication, or may mean that there is an association relationship. For example, A indicating B may mean that A directly indicates B, and for example, B may be acquired by A; or, A indicating B may mean that A indirectly indicates B, and for example, A indicates C, and B may be acquired by C; or, A indicating B may mean that there is an association relationship between A and B.

In the description of the embodiments of the present disclosure, the term "correspond / corresponding / correspondence" may mean that there is a direct correspondence or an indirect correspondence between the two, or may mean that there is an association relationship between the two, or may mean a relationship of indicating and being indicated, or a relationship of configuring and being configured, or the like.

To facilitate understanding of the technical solutions in the embodiments of the present disclosure, the related technologies in the embodiments of the present disclosure are described below. The following related technologies may be, as optional solutions, arbitrarily combined with the technical solutions in the embodiments of the present disclosure, and they all belong to the protection scope of the embodiments of the present disclosure.

(One) Communication based on a zero-power consumption device

Zero-power consumption communication uses power harvesting and backscatter communication technologies. FIG. 2 shows a schematic diagram of a zero-power consumption communication network. As shown in FIG. 2, the zero-power consumption communication network includes a network device 210 and a zero-power consumption terminal 220 (also referred to as a zero-power consumption device). The network device 210 is configured to send a wireless power supply signal and a downlink communication signal (such as a trigger signal) to the zero-power consumption terminal 220, and receive a backscattered signal from the zero-power consumption terminal 220. A basic zero-power consumption terminal 220 contains a power harvesting module, a backscatter communication module, and a low-power consumption computing module. In addition, the zero-power consumption device may also have a memory or a sensor for storing some basic information (such as item identification, etc.) or acquiring sensor data such as ambient temperature and ambient humidity, etc.

Key technologies of the zero-power consumption communication mainly include radio frequency power harvesting and backscatter communication.

FIG. 3 shows a schematic diagram of radio frequency power harvesting (RF Power Harvesting). As shown in FIG. 3, a radio frequency power harvesting module is implemented to harvest spatial electromagnetic wave power based on the electromagnetic induction principle, and then obtains power required for driving an operation of the zero-power consumption device, to for example, drive a low-power consumption demodulation and modulation module, a sensor, and memory reading, etc. Therefore, the zero-power consumption device may not need a traditional battery.

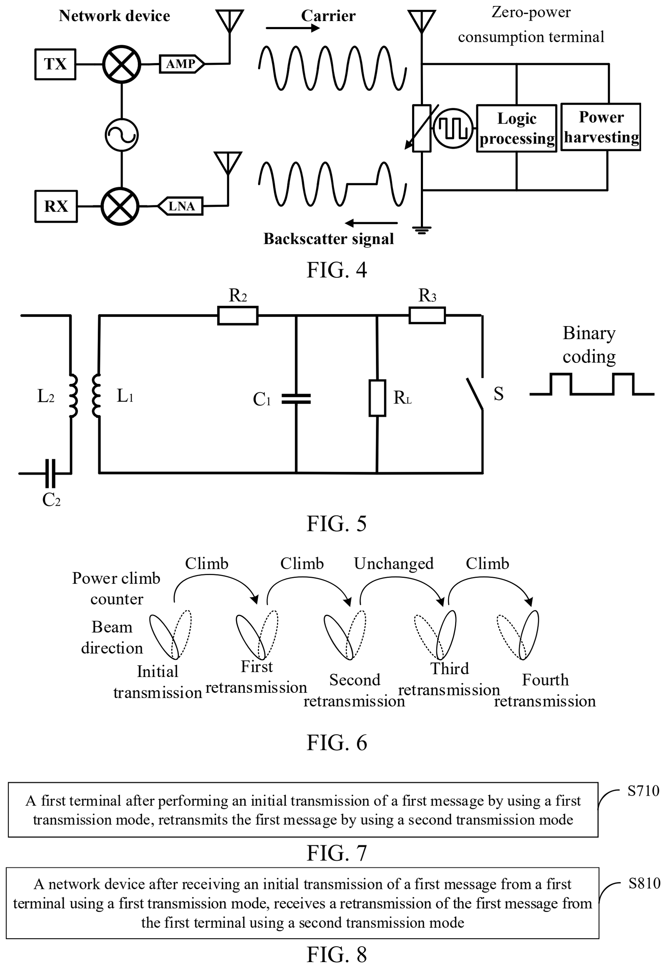

FIG. 4 shows a schematic diagram of a backscatter communication (Back Scattering). As shown in FIG. 4, the zero-power consumption terminal receives a wireless signal sent from a network, and modulates the wireless signal, loads information to be sent, and radiates the modulated signal from an antenna. This information transmission process is referred to as a backscatter communication. The backscatter and load modulation functions are inseparable. The load modulation adjusts and controls circuit parameter(s) of an oscillation loop circuit of the zero-power consumption device according to a rhythm of a data stream, to enable that the magnitude and other parameters of the impedance of the electronic tag are changed accordingly, so as to complete a process of modulation. The load modulation technology mainly includes two modes: resistive load modulation and capacitive load modulation. FIG. 5 shows a schematic diagram of resistive load modulation. As shown in FIG. 5, in the resistive load modulation, a resistor $R_3$ is connected in parallel with the load $R_L$, and the resistor $R_3$ is turned on or off based on the control of a binary data stream (e.g., turned on or off by a control switch). The on and off of the resistor will cause the change of the circuit voltage, thereby implementing amplitude keying modulation (Amplitude Shift Keying, ASK), that is, the modulation and transmission of the signal are implemented by adjusting the magnitude of the amplitude of the backscatter signal of the zero-power consumption device. Similarly, in the capacitive load modulation, the change of the resonant frequency of the circuit may be implemented by the on and off of the capacitor, thereby implementing frequency keying modulation (Frequency Shift Keying, FSK), that is, the modulation and transmission of the signal are implemented by adjusting the operating frequency of the backscatter signal of the zero-power consumption device.

It can be seen that the zero-power consumption device performs information modulation on an incoming wave signal by means of the load modulation mode, thereby implementing the backscatter communication process. Therefore, the zero-power consumption device has significant advantages that:

1. the terminal does not actively transmit a signal, so it does not need a complex radio frequency link, such as a PA, a radio frequency filter, etc.;

2. the terminal does not need to actively generate a high-frequency signal, so it does not need a high-frequency crystal oscillator; and

3. by means of the backscatter communication, the terminal's signal transmission does not need to consume the terminal's own power.

The data transmitted by the zero-power consumption terminal (such as an electronic tag) may be represented by different forms of code to represent binary "1" and "0". The wireless radio frequency identification system typically uses one of the following encoding methods: inverse non-return-to-zero (Non-return-to-zero Code, NRZ) encoding, Manchester encoding, unipolar return-to-zero (Unipolar RZ) encoding, differential binary phase (DBP) encoding, Miller encoding, and differential encoding. In simple terms, different pulse signals are used to represent 0 and 1.

(Two) Application scenarios for the zero-power consumption communication

The zero-power consumption communication may be widely used in various industries due to its significant advantages such as extremely low cost, zero-power consumption, and small size, such as logistics, smart warehousing, smart agriculture, power and electricity, industrial Internet, etc., oriented to vertical industries; it may also be applied to personal applications such as the smart wearable and smart home.

(Three) Power supply signal and trigger signal in the zero-power consumption communication system

1. Power supply signal

in terms of a power supply signal carrier, it may be a base station, a smart phone, a smart gateway, a charging station, a micro base station, or the like;

in terms of a frequency band, a radio wave used for power supply may be at a low frequency, an intermediate frequency, a high frequency, or the like;

in terms of a waveform, the radio wave used for power supply may be a sine wave, a square wave, a triangular wave, a pulse, a rectangular wave, or the like; in addition, the radio wave may be a continuous wave or a discontinuous wave (i.e., a certain time interruption is allowed).

The power supply signal may be a certain signal specified in a communication standard, such as an SRS (Sounding Reference Signal, sounding signal), a PUSCH (PUSCH), a PRACH (Physical Random Access Channel), a PUCCH (Physical Uplink Control Channel), a PDCCH (Physical Downlink Control Channel), a PDSCH (Physical Downlink Shared Channel), or a PBCH (Physical Broadcast Channel), etc.

2. trigger signal/control information

in terms of a trigger signal carrier, it may be a base station, a smart phone, a smart gateway, or the like;

in terms of a frequency band, a radio wave used for power supply may be a low frequency, an intermediate frequency, a high frequency, or the like;

in terms of a waveform, the radio wave used for power supply may be a sine wave, a square wave, a triangular wave, a pulse, a rectangular wave, or the like; in addition, the radio wave may be a continuous wave or a discontinuous wave (i.e., a certain time interruption is allowed).

The trigger signal may be a certain signal specified in a communication standard, such as an SRS, a PUSCH, a PRACH, a PUCCH, a PDCCH, a PDSCH, or a PBCH; it may also be a new signal.

(Four) Classification of the zero-power consumption terminal

Based on a power source and a usage mode of the zero-power consumption terminal, the zero-power consumption terminal may be classified into the following types.

(1) Passive zero-power consumption terminal

The zero-power consumption terminal does not need an internal battery, and when the zero-power consumption terminal approaches the network device, the zero-power consumption terminal is located within a near field range formed by antenna radiation of the network device, where the network device is, for example, a reader and writer of an RFID (Radio Frequency Identification, wireless radio frequency identification) system, etc. Therefore, the antenna(s) of the zero-power consumption terminal produce an induced current through electromagnetic induction, and the induced current drives a low-power consumption chip circuit of the zero-power consumption terminal. Demodulation of a forward link signal, and modulation of a backward link signal and other operations are implemented. For the backscatter link, the zero-power consumption terminal transmits a signal through the backscatter implementation..

It can be seen that the passive zero-power consumption terminal does not need an internal battery to drive both the forward link and the backward link, and is a true zero-power consumption terminal.

The passive zero-power consumption terminal does not need the battery, the radio frequency circuit and the baseband circuit are very simple, and they do not need, for example, an LNA (Low Noise Amplifier), a PA (Power Amplifier), a crystal oscillator, ADC (Analog to Digital Converter) and other devices, and therefore, it has many advantages such as small size, light weight, very cheap price, and long service life, etc.

The passive zero-power consumption terminal may also support other power harvesting modes, in which it performs power harvesting on power (e.g., light power, thermal power, kinetic power, or mechanical power, etc.) in the environment, to obtain power for driving a circuit to support the terminal device for communications.

(2) Semi-passive zero-power consumption terminal

The semi-passive zero-power consumption terminal is also not equipped with a conventional battery itself, but may use an RF (Radio Frequency, wireless radio frequency) power harvesting module to harvest radio wave power, or use the power harvesting module to harvest power (e.g., solar power, thermal power, mechanical vibration power, etc.) in the environment, and meanwhile, store the harvested power into a power storage unit (such as a capacitor). After obtaining the power, the power storage unit may drive a low-power consumption chip circuit of the zero-power consumption terminal. Demodulation of the forward link signal, and modulation of the backward link signal and other operations are implemented. For the backscatter link, the zero-power consumption terminal transmits a signal through the backscatter implementation.

It can be seen that the semi-passive zero-power consumption terminal does not need an internal battery to drive both the forward link and the backward link. Although the power stored in the capacitor is used in the operation, the power comes from the radio power harvested by the power harvesting module. Therefore, it is also a true zero-power consumption terminal.

The semi-passive zero-power consumption terminal inherits many advantages of the passive zero-power consumption terminal, so it has many advantages such as small size, light weight, very cheap price and long service life.

(3) Active zero-power consumption terminal

The zero-power consumption terminal used in some scenarios may also be an active zero-power consumption terminal, and this type of terminal may have an internal battery. The battery is used to drive a low-power consumption chip circuit of the zero-power consumption terminal. Demodulation of the forward link signal, and modulation of the backward link signal and other operations are implemented. However, for the backscatter link, the zero-power consumption terminal transmits a signal through the backscatter implementation. Therefore, the zero-power consumption of this type of terminal is mainly reflected in the fact that the signal transmission of the backward link does not need the terminal's own power, but uses the backscatter mode.

The active zero-power consumption terminal is equipped with an internal battery to supply power for an RFID chip, to increase a reading-writing distance of the tag and improve the reliability of communications. Therefore, it may be applied in some scenarios with relatively high requirements on aspects such as the communication distance, reading latency, or the like.

Some zero-power consumption terminals, such as a semi-passive zero-power consumption terminal or an active zero-power consumption terminal, may have a capability of active transmission, that is, the backward link may communicate by using an active transmission mode in addition to communicating in the backscatter mode.

As is well known, the service type of the zero-power consumption Internet of Things, similar to service types of other Internet of Things, will mainly focus on uplink services. Based on a transmitter type of the zero-power consumption terminal, the zero-power consumption terminal may be classified into the following types:

(1) Zero-power consumption device based on backscatter

This type of zero-power consumption device transmits uplink data by using the aforementioned backscatter mode. This type of device does not have an active transmitter for the active transmission, but only has a transmitter for backscatter. Therefore, when this type of terminal transmits data, the network device needs to provide a carrier, and this type of terminal device performs backscatter based on the carrier, to implement the data transmission.

(2) Zero-power consumption device based on an active transmitter

This type of zero-power consumption device uses an active transmitter with an active transmission capability for an uplink data transmission, therefore, when sending data, this type of zero-power consumption device may transmit the data by using its own active transmitter, without the need for the network device to provide a carrier. The active transmitter applicable for the zero-power consumption device may be, for example, an ultra-low-power consumption ASK, an ultra-low-power consumption FSK transmitter, etc., and based on the current implementation, in a case where this type of transmitter transmits a 100 $\mu$w (microwatt) signal, its overall power consumption may be reduced to 400 to 600 $\mu$w.

(3) Zero-power consumption device with both backscatter and active transmitter

This type of terminal may support both backscatter and active transmitters. According to different situations (such as an electric quantity condition, available ambient power), or based on scheduling of the network device, the terminal may determine to use which transmission mode for an uplink signal: whether to use the backscatter mode or use the active transmitter for the active transmission.

(Five) Cellular passive Internet of Things

The cellular Internet of Things is booming, and Internet of Things technologies such as NB-IoT (Narrow Band Internet of Things), MTC, and RedCap (Reduced Capability), etc., have been standardized currently, but Internet of Things communication requirements in many scenarios cannot be satisfied using existing technologies, for example, as follows.

1. Harsh communication environment

Some Internet of Things scenarios may face extreme environments with high temperature, extremely low temperature, high humidity, high voltage, high radiation or high-speed movement, etc., such as an ultra-high voltage substation, high-speed train track monitoring, environment monitoring in a high-cold area, industrial production lines, etc. In these scenarios, existing IoT terminals will be unable to operate due to the limitations of the operating environment of traditional power supplies. In addition, the extreme operating environments are not conducive to the maintenance for the Internet of Things, such as the replacement of the battery.

2. Requirement for an extremely small size of the terminal form

Some Internet of Things communication scenarios, such as the food traceability, commodity circulation, and smart wearables, require terminals to have an extremely small size to facilitate the use in these scenarios. For example, Internet of Things terminals used for commodity management in the circulation process usually use the form of electronic tags, which are embedded in the commodity packaging in a very small form. For another example, lightweight wearable devices may satisfy user needs while improving user experiences.

3. Requirement for an extremely low-cost of the Internet of Things communication

Numerous Internet of Things communication scenarios require the cost of Internet of Things terminals to be low enough, to improve their competitiveness with respect to other alternative technologies. For example, in logistics or warehousing scenarios, to facilitate the management of a large number of circulating goods, the Internet of Things terminal may be attached onto each goods, so that the accurate management of the entire process and entire cycle of the logistics may be completed through the communication between the terminal and the logistics network. These scenarios require the prices of Internet of Things terminals to be sufficiently competitive.

Therefore, in order to cover these unmet Internet of Things communication needs, in the cellular network, the Internet of Things with the ultra low cost, extremely small size, and free battery/free maintenance also needs to be developed, and the zero-power consumption Internet of Things may just satisfy these needs.

It should be noted additionally that in the process of the standardization discussion, the zero-power consumption Internet of Things may also be referred to as ambient power-supported Internet of Things or ambient power-enabled Internet of Things (Ambient power enabled IoT, Ambient IoT). The said Ambient IoT (also referred to as an A-IoT briefly) refers to an IoT device that uses various ambient power, such as wireless radio frequency power, light power, solar power, thermal power, or mechanical power, etc. This type of device may have no power storage capability or may have very limited power storage capability (e.g., using a capacitor with a capacity of several tens of μF (microfarads).

Based on discussions of the Ambient IoT application scenarios, the Ambient IoT may be used in at least the following four types of scenarios:

object recognition, such as logistics, production line product management, and supply chain management;
environmental monitoring, such as monitoring of temperature, humidity and harmful gases of the working environment and natural environment;
positioning, such as indoor positioning, intelligent object finding, production line goods positioning, etc.; and
intelligent controlling, such as intelligent control of various electrical appliances in smarct home (turning on and off air conditioners, adjusting temperature), and intelligent control of various facilities in agricultural greenhouses (automatic irrigation and fertilization).

(Six) Power control of an RACH (Random Access Channel) process in NR

The power control of PRACH (Physical Random Access Channel) uses a mechanism of open-loop power control, where the UE sets PRACH transmission power based on factors such as expected receiving power configured by the network and path loss obtained by measuring a downlink reference signal, etc. In the random access process, if the UE sends a PRACH but does not receive an RAR (Random Access Response) from the network or does not successfully receive a conflict resolution message, the UE needs to retransmit the PRACH. FIG. 6 shows a schematic diagram of power control of a PRACH. As shown in FIG. 6, when the NR UE supports a plurality of transmission beams, and when the transmission beams remain unchanged, the transmission power of the retransmitted PRACH climbs on the basis of the power of the last sent PRACH, until the random access process is successfully completed.

If the transmission power continues to increase when switching the beams, it may cause a large change in an interference level to a target beam that is switched to, thereby affecting signal transmissions of other users. Therefore, in NR, it is considered that the counting of the power climb is kept unchanged for a first transmission after switching, and the first transmission is attempted first, and if a retransmission is performed again, the counter is incremented, so this design takes into account both the delay of the random access and interference control when beam switching.

In this case, the UE calculates the PRACH transmission power for a preamble retransmission according to a latest estimated path loss and power climb counter.

Specifically, for a service cell $c$, a carrier frequency $f$, and an active UL BWP (Uplink Bandwidth Part) $b$, the UE determines the transmission power $P_{PRACH,b,f,c}(i)$ of the PRACH based on DL RS (Downlink Reference Signal) on a transmission occasion $i$, with reference to the following formula specifically:

$$P_{PRACH,b,f,c}(i) = min\left\{P_{CMAX,f,c}(i), P_{PRACH,t\arg et,f,c} + PL_{b,f,c}\right\}[dBm].$$

$P_{CMAX,f,c}(i)$ is the maximum output power configured by the UE; for the carrier frequency $f$ and the service cell $c$, $P_{PRACH,target,f,c}$ is PRACH target receiving power provided by an upper layer; $PL_{b,f,c}$ is a path loss obtained based on measuring a DL RS associated with the PRACH transmission in the active downlink BWP on the service cell $c$, for the active UL BWP $b$ on the carrier frequency $f$, and the measured $PL_{b,f,c}$ is represented by RSRP and is in units of dBm (decibel milliwatt).

In some scenarios, the terminal may not be capable of supporting flexible power control. For example, due to the need to design and implement the ambient power enabled Internet of Things device from the perspective of low complexity, low cost, and low-power consumption, the ambient power enabled Internet of Things device often cannot support flexible power control like traditional terminal devices. For example, it cannot continuously perform the autonomous power climb when performing transmissions, and the transmission power in the communication is often affected by the power harvesting efficiency and power harvesting time (that is, it is related to the obtained total power for the communication and the total time required for the communication). In particular, for the terminal using the backscatter communication mode, the signal transmission power in the communication is closely related to the strength of the incoming signal.

Based on this, if the information sent from the terminal is not successfully received by the network device, how to improve the probability of the network device correctly receiving the retransmitted information and improve the data transmission performance of the terminal, is still a technical problem to be solved.

FIG. 7 is a schematic flowchart of a transmission method according to an embodiment of the present disclosure. The method may optionally be applied to the system shown in FIG. 1, but is not limited thereto. The method includes at least some of the following content.

S710, a first terminal after performing an initial transmission of a first message by using a first transmission mode, retransmits the first message by using a second transmission mode; where the second transmission mode is different from the first transmission mode.

In the embodiments of the present disclosure, the first terminal may be any terminal device, including a zero-power consumption device or an ambient power enabled Internet of Things device.

Exemplarily, the first message may include access information, data information, or request information, etc., and the embodiments of the present disclosure do not limit the content of the first message.

In the embodiments of the present disclosure, performing the initial transmission of the first message means performing a first transmission of the first message. Performing a retransmission of the first message means retransmitting the first message, which includes but is not limited to a retransmission in a case where the first message fails to be successfully transmitted to the network device, which enables the network device to correctly receive the first message.

In the embodiments of the present disclosure, the transmission mode may include a signal transmission mode, a transmission configuration, etc.

In accordance with the above-mentioned method, the present disclosure also provides a transmission method performed by a network device. FIG. 8 is a schematic flowchart of a transmission method according to another embodiment of the present disclosure. The method may optionally be applied to the system shown in FIG. 1, but is not limited thereto. The method includes:

S810, a network device after receiving an initial transmission of a first message from a first terminal using a first transmission mode, receives a retransmission of the first message from the first terminal using a second transmission mode; where the second transmission mode is different from the first transmission mode.

According to the above embodiments, after performing an initial transmission of a first message, the first terminal performs a retransmission of the first message by using the second transmission mode different from the first transmission mode used for the initial transmission, so that the retransmission failure caused by using the same transmission mode may be avoided, thereby improving the probability of transmitting the data correctly when retransmitting, and correspondingly improving the data transmission performance.

In some embodiments, the second transmission mode being different from the first transmission mode, includes: a signal transmission mode in the second transmission mode is different from a signal transmission mode in the first transmission mode; and/or a transmission configuration in the second transmission mode is different from a transmission configuration in the first transmission mode.

Specifically, the second transmission mode being different from the first transmission mode, may be that signal transmission modes of the initial transmission and the retransmission are different, or that transmission configurations of the initial transmission and the retransmission are different, or that signal transmission modes of the initial transmission and the retransmission are different and the transmission configurations of the initial transmission and the retransmission are different. In some embodiments, the transmission configuration in the second transmission mode has better data transmission performance than the transmission configuration in the first transmission mode.

In some embodiments, the signal transmission mode includes an active transmission mode and/or a backscatter mode. For example, the signal transmission mode of the initial transmission of the first message is the backscatter mode, and the signal transmission mode of the retransmission is the active transmission mode. For another example, the signal transmission mode of the initial transmission of the first message is the active transmission mode, and the signal transmission mode of the retransmission is the backscatter mode.

In some embodiments, the transmission configuration includes at least one of:

transmission power;
a transmission beam;
a frequency-domain resource configuration;
a time-domain resource configuration;
a modulation mode;
an encoding mode;
a waveform;
an encoding configuration; or
a spreading configuration.

Accordingly, the transmission configuration in the second transmission mode being different from the transmission configuration in the first transmission mode may be that: at least one of the transmission power, transmission beam, frequency-domain resource configuration, time-domain resource configuration, modulation mode, encoding mode, waveform, encoding configuration, or spreading configuration in the second transmission mode is different from that in the transmission configuration in the first transmission mode.

It should be noted that, in the embodiments of the present disclosure, the transmission configuration that is different between the initial transmission and the retransmission may include one of the above configurations or a combination of the above configurations.

For example, if the transmission configuration includes the transmission power and the transmission beam, the transmission power used for the retransmission of the first message may be greater than the transmission power used for the initial transmission of the first message, and the transmission beam used for the retransmission of the first message may be different from the transmission beam used for the initial transmission of the first message.

For example, the transmission configuration includes the modulation mode, and the modulation mode includes OOK, PSK, FSK, ASK, QAM, etc. If ASK is used for the initial transmission of the first message, OOK, PSK, FSK, or QAM may be used for the retransmission of the first message.

For another example, the transmission configuration includes the encoding mode and the waveform, the encoding mode includes NRZ encoding, Manchester encoding, unipolar return-to-zero encoding, DBP encoding, Miller encoding, differential encoding, etc, and the waveform includes a sine wave, a square wave, a triangular wave, a pulse, a rectangular wave, etc. If the NRZ encoding and sine wave are used for the initial transmission of the first message, the Manchester encoding, unipolar return-to-zero encoding, DBP encoding, Miller encoding, or differential encoding, as well as the square wave, triangular wave, pulse, or rectangular wave may be used for the retransmission of the first message.

In some embodiments, the above-mentioned frequency-domain resource configuration may include positions of frequency-domain resources and/or a number of frequency-domain resources. For example, the number of frequency-domain resources used for the retransmission is greater than the number of frequency-domain resources used for the initial transmission.

In some embodiments, the above-mentioned time-domain resource configuration may include at least one of: a number of time-domain resources; a length of time-domain resources; a time-domain length of single-bit data; or a time-domain length of a single modulated symbol. For example, the length of time-domain resources used for the retransmission is greater than the length of time-domain resources used for the initial transmission, or the time-domain length of the single-bit data in the retransmission is greater than the time-domain length of the single-bit data in the initial transmission.

In some embodiments, the encoding configuration includes at least one of: a code rate; a code length; a chip length; or a number of chips in single-bit data. For example, the code length in the retransmission is greater than the code length in the initial transmission, or the length of a single chip in the retransmission is greater than the length of a single chip in the initial transmission.

In some embodiments, the spreading configuration includes a spreading factor and/or a spreading sequence. For example, different spreading factors, or different spreading sequences, or different spreading factors and different spreading sequences are used for the retransmission and the initial transmission.

It can be understood that the transmission configuration in the embodiments of the present disclosure is not limited to the above-mentioned examples, and may be implemented according to different application scenarios, or according to a system specification, protocol specification, or actual needs, which are not enumerated here one by one.

In some embodiments, retransmitting the first message is triggered in a case where a first condition is satisfied.

The first condition may be set according to an actual application scenario, a system specification, a protocol specification, etc. Some exemplary conditions are provided below, and it should be noted that the first condition may include one or more of the following conditions.

Condition 1: a response message for the first message is not received by the first terminal at a first time window or a first time-domain position after transmitting the first message.

The response message is information that the network device needs to send after correctly receiving the first message. In a case where the first condition includes Condition 1, the first terminal after transmitting the first message, listens to the response message at a specific time window or specific time-domain position, and if no response message is received, performs a retransmission.

Specifically, the first terminal may listen to the response message at a first time window or a first time-domain position after the initial transmission of the first message, to determine whether to perform the retransmission. In some embodiments, the first terminal may perform the retransmission for multiple times, and based on this, the first terminal may listen to a response message at a first time window or a first time-domain position after the retransmission of the first message, to determine whether to perform the retransmission again.

Accordingly, in some embodiments, the above-mentioned transmission method also includes: sending, by the network device, a response message to the first terminal at a first time window or a first time-domain position, in a case of receiving the first message correctly. The response message is used by the terminal device to determine whether to perform the retransmission. The receiving correctly, represents receiving and being capable of parsing correctly.

In some embodiments, the response message includes at least one of:

an acknowledgement (ACK) message for the first message;
first indication information, the first indication information being used to schedule a data transmission of the first terminal; or

a fourth message, a transmission of which is triggered by the first message.

For example, the response message includes the ACK message, that is, the network device after receiving the first message correctly, indicates to the first terminal via the response message that the first message is received successfully.

For another example, the response message includes the first indication information, i.e., subsequent scheduling information, that is, the network device after receiving the first message correctly, schedules the first terminal to transmit new data, via the response message.

For another example, the first message is used to trigger the transmission of the fourth message, that is, if the network device after receiving the first message successfully, needs to send the fourth message, the response message may include the fourth message.

Optionally, the response message may also include a combination of two or three of the above ACK message, first indication information, and fourth message, which is not enumerated here one by one.

In some embodiments, the position of the first time window or the first time-domain position is determined based on time of transmitting the first message and first time-domain offset information. For the network device, the position of the first time window or the first time-domain position may be determined based on time of receiving the first message and first time-domain offset information. The first time-domain offset information may be construed as an offset with respect to the time of transmitting the first message, or a time interval or a time distance from the time of transmitting the first message, etc.

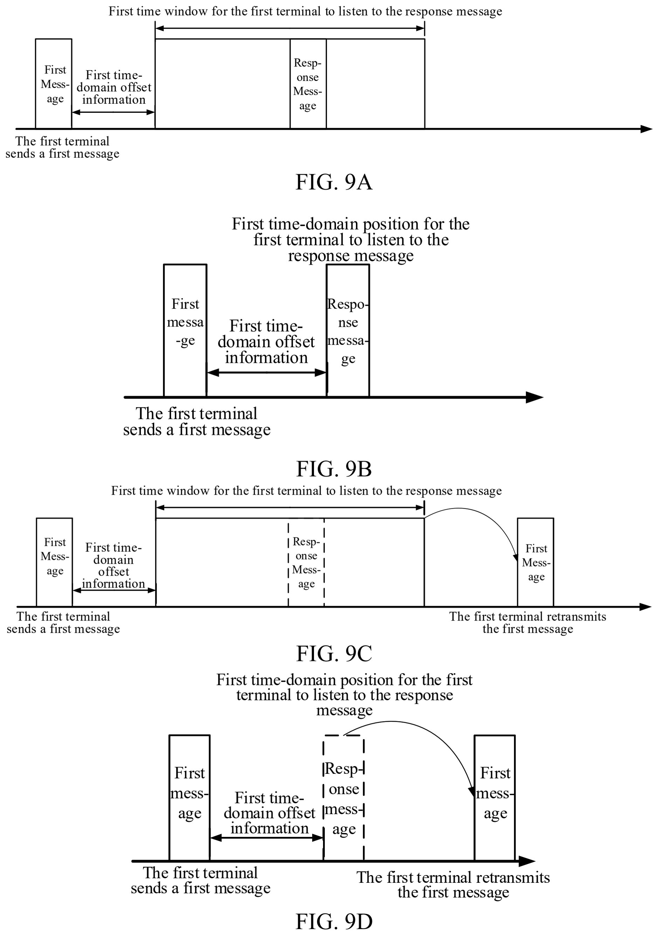

FIG. 9A is a schematic diagram of a first time window for listening to a response message in the embodiments of the present disclosure. As shown in FIG. 9A, the first time window for the first terminal to listen to the response message may be determined based on the time of transmitting the first message and the first time-domain offset information. Specifically, a starting point and/or an ending point of the first time window may be determined, and FIG. 9A shows the determination of the starting point of the first time window.

In some embodiments, a length of the first time window is pre-specified or configured by a network device. Optionally, the length of the first time window may be semi-statically configured or dynamically configured by a network device.

For example, the starting point of the first time window may be determined based on the time of transmitting the first message and the first time-domain offset information, and then the ending point of the first time window may be determined based on a pre-specified window length.

Optionally, the first time-domain offset information may include one or more offsets. For example, the first time-domain offset information includes a first offset and a second offset, and accordingly, the starting point of the first time window may be determined based on the time of transmitting the first message and the first offset, and the ending point of the first time window may be determined based on the time of transmitting the first message and the second offset.

FIG. 9B is a schematic diagram of a first time-domain position for listening to a response message in the embodiments of the present disclosure. As shown in FIG. 9B, the first time-domain position for the first terminal to listen to the response message may be determined based on the time of transmitting the first message and the first time-domain offset information.

In some embodiments, the first time-domain offset information is pre-specified or configured by a network device. Optionally, the first time-domain offset information may be semi-statically configured or dynamically configured by a network device.

FIG. 9C is a schematic diagram of a retransmission in a case where no response message is listened to in a first time window in the embodiments of the present disclosure. FIG. 9D is a schematic diagram of a retransmission in a case where no response message is listened to at a first time-domain position in the embodiments of the present disclosure. As shown in FIG. 9C and FIG. 9D, in a case where the first condition includes Condition 1, if the first terminal does not receive the response message for the first message at the first time window or the first time-domain position after transmitting the first message, it retransmits the first message after the first time window or the first time-domain position. It can be understood that, as shown in FIG. 9A and FIG. 9B, if the first terminal receives the response message for the first message at the first time window or the first time-domain position after transmitting the first message, it may not retransmit the first message.

Condition 2: a second message is received by the first terminal at a second time window or a second time-domain position after transmitting the first message; where the second message is used to indicate the first terminal to retransmit the first message.

Optionally, the second message may be a message dedicated to indicating a retransmission, or may be a message that indicates a retransmission by indicating other information. In a case where the first condition includes Condition 2, the first terminal listens to the second message at a specific time window or a specific time-domain position after transmitting the first message, and if it receives the second message, it performs a retransmission.

Specifically, the first terminal may listen to a response message at a second time window or a second time-domain position after the initial transmission of the first message, to determine whether to perform the retransmission of the first message. In some embodiments, the first terminal may perform the retransmission of the first message for multiple times, and based on this, the first terminal may listen to a response message at the second time window or the second time-domain position after retransmitting the first message, to determine whether to perform a retransmission again.

Accordingly, in some embodiments, the above-mentioned transmission method further includes: sending, by the network device, a second message to the first terminal at a second time window or a second time-domain position, in a case where the first message is not received correctly; where the second message is used to indicate to the first terminal to retransmit the first message. The not received correctly, may includes not received, or received but not capable of being parsed correctly.

In some embodiments, the second message includes at least one of:

a negative acknowledgement (NACK) message for the first message;
second indication information, the second indication information being used to indicate the first terminal to retransmit the first message;
third indication information, the third indication information being used to indicate that a type of data to be transmitted by the first terminal is scheduled to be retransmission data; or
fourth indication information, the fourth indication information being used to indicate a transmission mode for retransmitting the first message.

For example, the second message includes the NACK message, indicating that the first message sent from the first terminal is not received correctly. For another example, the second message includes the second indication information, and the second indication information is dedicated to indicating a retransmission.

For another example, the second message includes the third indication information, which is used to indicate that a type of data to be transmitted by the first terminal is scheduled to be retransmission data. In actual applications, the third indication information may be a data type identification (flag), and the data type identification represents that a transmission scheduled by the network device is retransmission data or that a transmission scheduled is not new data. The data type identification may represent that the transmission scheduled is new data, by a first value, and represent that the transmission scheduled is retransmission data or the transmission scheduled is not new data, by a second value.

For example, the second message includes the fourth indication information, which is used to indicate a transmission mode for retransmitting the first message, and for example, before a certain retransmission, the second message received by the first terminal includes the fourth indication information used to indicate the second transmission mode.

Optionally, the second message may also include a combination of at least two of the above NACK message, second indication information, third indication information, and fourth indication information, and for example, it includes the NACK message and the fourth indication information, or includes the second indication information and the fourth indication information, which is not enumerated one by one here.

In some embodiments, a position of the second time window or the second time-domain position is determined based on time of transmitting the first message and second time-domain offset information. For a network device, the position of the second time window or the second time-domain position is determined based on time of receiving the first message and second time-domain offset information.

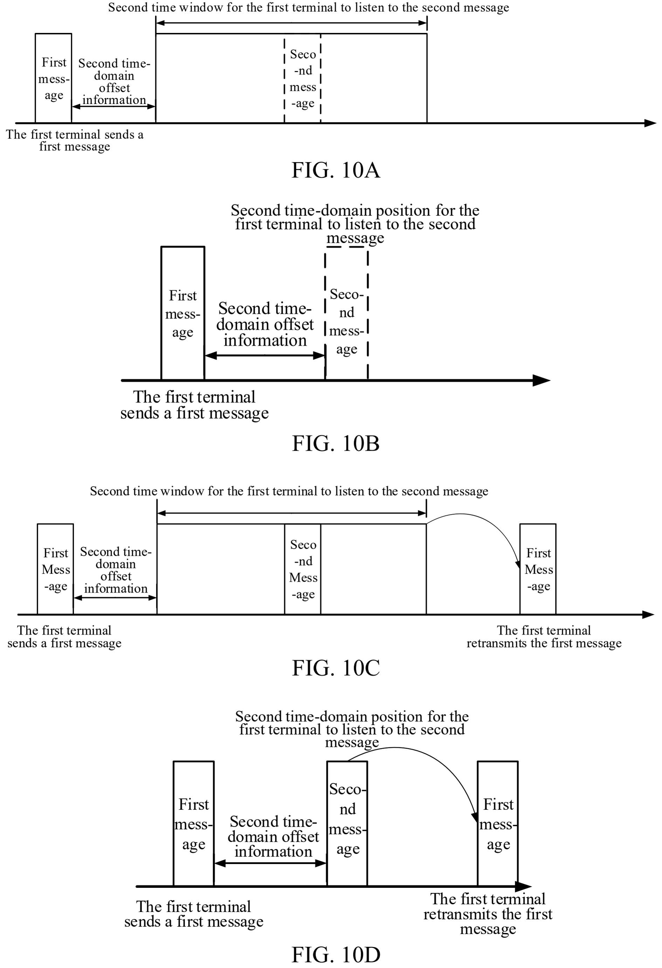

FIG. 10A is a schematic diagram of a second time window for listening to a second message in the embodiments of the present disclosure. As shown in FIG. 10A, the second time window for the first terminal to listen to the second message may be determined based on the time of transmitting the first message and the second time-domain offset information. Specifically, a starting point and/or an ending point of the second time window may be determined, and FIG. 10A shows the determination of the starting point of the first time window.

In some embodiments, a length of the second time window is pre-specified or configured by a network device. Optionally, the length of the second time window may be semi-statically configured or dynamically configured by a network device.

For example, the starting point of the second time window may be determined based on the time of transmitting the first message and the second time-domain offset information, and then the ending point of the second time window may be determined based on a pre-specified window length.

Optionally, the second time-domain offset information may include one or more offsets. For example, the second time-domain offset information includes a third offset and a fourth offset, and accordingly, the starting point of the second time window may be determined based on the time of transmitting the first message and the third offset, and the ending point of the third time window may be determined based on the time of transmitting the first message and the fourth offset.

FIG. 10B is a schematic diagram of a second time-domain position for listening to a second message in the embodiments of the present disclosure. As shown in FIG. 10B, the second time-domain position for the first terminal to listen to the second message may be determined based on the time of transmitting the first message and the second time-domain offset information.

In some embodiments, the second time-domain offset information is pre-specified or configured by a network device. Optionally, the second time-domain offset information may be semi-statically configured or dynamically configured by a network device.

FIG. 10C is a schematic diagram of a retransmission in a case where a second message is listened to in a second time window in the embodiments of the present disclosure. FIG. 10D is a schematic diagram of a retransmission in a case where a second message is listened to at a second time-domain position in the embodiments of the present disclosure. As shown in FIG. 10C and FIG. 10D, in a case where the first condition includes Condition 2, if the first terminal receives the second message at the second time window or the second time-domain position after transmitting the first message, it may retransmit the first message after the second time window or the second time-domain position. It can be understood that, as shown in FIG. 10A and FIG. 10B, if the first terminal does not receive the second message at the second time window or the second time-domain position after transmitting the first message, it may not retransmit the first message.

Condition 3: the first message transmitted by the first terminal collides with a third message sent from a second terminal.

In actual applications, the first terminal may listen to channel(s) while sending the first message, to identify whether the first message collides with a third message sent from other devices. For example, in an A-IoT scenario, there may be a large number of A-IoT devices simultaneously reporting information to the network device, the A-IoT device may listen to the channel while sending, to identify whether there is a collision with information sent from other devices, and if a collision occurs, the first terminal retransmits the first message.

Condition 4: strength of a first signal received by the first terminal from a network device is lower than a first threshold.

Exemplarily, the first signal may be a reference signal, a dedicated signal, a control signal, or a data signal sent from the network device, and the embodiments of the present disclosure do not limit the type of the first signal.

The first terminal may determine whether coverage performance is poor by comparing the strength of the received first signal with the first threshold. In a case where the strength of the first signal received by the first terminal from the network device is lower than the first threshold, the first terminal may be far away from the network device and located in an area with poor data coverage performance, resulting in the network device being unable to correctly receive the first message sent from the first terminal in one go. In a case where the first condition includes Condition 4, the first terminal may retransmit the first message in a case where the strength of the first signal is lower than the first threshold, thereby improving the probability that the network device receives the first message correctly and improving the data transmission performance.

In some embodiments, the second transmission mode is determined based on first reference information, and the first reference information includes at least one of:

strength of a second signal received by the first terminal from a network device;
a number of retransmissions of the first message; or
a transmission duration of the first message.

Exemplarily, the first signal may be a reference signal, a dedicated signal, a control signal, or a data signal sent from the network device, etc., and the embodiments of the present disclosure do not limit the type of the first signal.

Exemplarily, the transmission duration refers to a duration from the initial transmission of the first message to the retransmission of the first message. For example, the first terminal may perform the retransmission of the first message for multiple times, and in a case of determining the transmission mode used for an i-th retransmission thereof, the transmission duration may be a duration from the initial transmission of the first message to the i-th retransmission of the first message.

Optionally, retransmitting the first message by using the second transmission mode, includes:
retransmitting, by the first terminal, the first message by using the second transmission mode different from the first transmission mode, in a case where the first reference information satisfies a second condition.

That is, the first terminal determines whether to retransmit the first message by using a second transmission mode different from the first transmission mode, according to whether the first reference information satisfies the second condition, that is, determines whether the transmission mode of the retransmission is the second transmission mode according to whether the first reference information satisfies the second condition.

Optionally, the above-mentioned transmission method may also include: retransmitting, by the first terminal, the first message by using the first transmission mode, in a case where the first reference information does not satisfy the second condition.

For example, the first terminal may perform the retransmission of the first message for multiple times, where some of the retransmissions are performed by using the second transmission mode. Specifically, in a case where the second condition is not satisfied or has not been satisfied, the first terminal performs the retransmission by using the first transmission mode of the initial transmission. In a case where the second condition is satisfied, the first terminal performs the retransmission by using the second transmission mode different from the first transmission mode.

Exemplarily, the second condition includes at least one of:

strength of the second signal being less than a second threshold;
a number of retransmissions of the first message being greater than a third threshold; or
a transmission duration of the first message being greater than a fourth threshold.

For example, in a case where the first reference information includes the strength of the second signal, the second condition may include that the strength of the second signal is less than the second threshold. In a case where the first reference information includes the number of retransmissions of the first message, the second condition may include that the number of retransmissions of the first message is greater than the third threshold. In a case where the first reference information includes the transmission duration of the first message, the second condition may include that the transmission duration of the first message is greater than the fourth threshold.

Taking an example in which the first reference signal includes the strength of the second signal received by the first terminal from the network device, preset the second threshold (a signal strength threshold) Threshold, and determine the transmission mode for the retransmission according to a relationship between the signal strength S of the second signal transmitted by the network device, measured by the first terminal and the second threshold:

in a case where S > Threshold, perform the retransmission by using the same transmission mode (the first transmission mode) as the initial transmission;
in a case where S < Threshold, perform the retransmission by using a transmission mode different from that used for the initial transmission (optionally, this transmission mode has better data transmission performance than that of the initial transmission), and for example, the second transmission mode is used for at least some of the retransmissions.

Taking an example in which the first reference signal includes the number of retransmissions of the first message, preset the third threshold (a retransmission number threshold) $K_{Threshold}$, and determine the transmission mode for the retransmission according to a relationship between the number of retransmissions of the first message and $K_{Threshold}$:

in a case where the number of retransmissions is less than $K_{Threshold}$, perform the retransmission by using the same transmission mode (the first transmission mode) as the initial transmission;
in a case where the number of retransmissions is greater than $K_{Threshold}$, perform the retransmission by using a transmission mode different from that used for the initial transmission.

Taking an example in which the first reference signal includes the transmission duration of the first message, preset the fourth threshold (time threshold) $T_{threshold}$, and determine the transmission mode for the retransmission according to a relationship between the transmission duration of the first message and $T_{threshold}$:

if the transmission time < the time threshold $T_{threshold}$, perform the retransmission by using the same transmission mode (the first transmission mode) as the initial transmission;
if the transmission time > the time threshold $T_{threshold}$, perform the retransmission by using a transmission mode different from that used for the initial transmission.

It can be understood that in the above-mentioned examples, the second condition includes the strength of the second signal being less than the second threshold, the number of retransmissions of the first message being greater than the third threshold, or the transmission duration of the first message being greater than the fourth threshold. It should be noted that in actual applications, the second condition may also include a combination of two or more conditions, which may be set according to an actual application scenario, a system specification, a protocol specification, etc., and will not be enumerated one by one here. In some embodiments, if the second condition includes a combination of two or more conditions, the second condition is considered to be satisfied in a case where all the two or more conditions are satisfied. For example, if the second condition may include the strength of the second signal being less than the second threshold and the number of retransmissions of the first message being greater than the third threshold, the first terminal retransmits the first message by using the second transmission mode in a case where the strength of the second signal is less than the second threshold and the number of retransmissions of the first message is greater than the third threshold. In other embodiments, if the second condition includes a combination of two or more conditions, the second condition is considered to be satisfied in a case where any one of the conditions is satisfied. For example, if the second condition may include the strength of the second signal being less than the second threshold and the number of retransmissions of the first message being greater than the third threshold, the first terminal retransmits the first message by using the second transmission mode in a case where the strength of the second signal is less than the second threshold or the number of retransmissions of the first message is greater than the third threshold.

In some embodiments, in a case where the first reference information satisfies the second condition, each retransmission of multiple retransmissions of the first message is performed by using the second transmission mode. That is, in a case where the first terminal retransmits the first message for multiple times, the same transmission mode is used for each retransmission.

For example, the chip length used for the initial transmission is T, and the chip length used for the retransmission is 2T.

For another example, a frequency-domain resource used for the initial transmission is F1, and a frequency-domain resource used for the retransmission is F1+$\Delta$F.

For another example, the initial transmission is sent at power P1, and power used for the retransmissions is all P1+$\Delta$P.

In some embodiments, different transmission modes are used for at least some retransmissions of multiple retransmissions of the first message, in a case where the first reference information satisfies the second condition. Exemplarily, the second transmission mode is used for at least one retransmission of the multiple retransmissions, and a third transmission mode may be used for the other retransmissions, and the third transmission mode is different from the first transmission mode and also different from the second transmission mode. For example, the chip length used for the initial transmission is T, the chip length used for the first retransmission and the second retransmission is 2T, and the chip length used for the third retransmission and subsequent retransmissions is 3T.

Optionally, in a case where the first reference information satisfies the second condition, the first terminal may further determine a transmission mode of the retransmission according to the number of retransmissions.

For example, the chip length used for the initial transmission is T, and the chip length used for the retransmission is X*T, where X is a value associated with the number of retransmissions. X may be equal to the number of retransmissions, or different value ranges of the number of retransmissions may correspond to different values of X.

For another example, a frequency-domain resource used for the initial transmission is F1, and a frequency-domain resource used for the retransmission is F1+$\Delta$F*X, where X is a value associated with the number of retransmissions.

For another example, the initial transmission is sent at power P1, and power used for the retransmission is P1+$\Delta$P*X, where X is a value associated with the number of retransmissions.

According to the above-mentioned embodiments, the transmission mode of the retransmission may be flexibly set according to actual needs.

In some embodiments, the transmission method may further include: determining, by the first terminal, the second transmission mode based on an information value range corresponding to the first reference information, from a plurality of transmission modes corresponding to a plurality of information value ranges respectively.

Exemplarily, the plurality of information value ranges are determined based on a plurality of thresholds, and the plurality of thresholds are pre-specified or configured by a network device. Optionally, the plurality of thresholds may be semi-statically configured or dynamically configured by a network device, where the semi-statically configured by the network, may be implemented by broadcast, multicast or unicast.

Taking an example in which the first reference information includes the strength of the second signal received by the first terminal from the network device, in a case where there are a plurality of signal strength thresholds (including Threshold0, Threshold1, Threshold2, etc.), the transmission mode used for the retransmission may be determined according to a relationship between the measured signal intensity S of the second signal sent from the network device and the thresholds, or according to a correspondence between the signal intensity S and a plurality of signal intensity value ranges determined based on the plurality of thresholds:

in a case where S > Threshold0, perform the retransmission by using transmission mode 1 (optionally, using the same first transmission mode as that for the initial transmission);
in a case where Threshold1 < S < Threshold0, perform the retransmission by using transmission mode 2;
in a case where Threshold2 < S < Threshold1, perform the retransmission by using transmission mode 3;
and so on.

Taking an example in which the first reference information includes the number of retransmissions of the first message, in a case where there are a plurality of retransmission number thresholds (including $K_{Threshold0}$, $K_{Threshold1}$, $K_{Threshold2}$, etc.), the transmission mode used for the retransmission may be determined according to a relationship between the number K of retransmissions and the plurality of thresholds, e.g., according to a correspondence between the number K of retransmissions and a plurality of value ranges determined based on the plurality of thresholds:

in a case where $K > K_{Threshold0}$, perform the retransmission by using transmission mode 1 (optionally, using the same first transmission mode as that for the initial transmission);

in a case where $K_{Threshold0} < K < K_{Threshold1}$, perform the retransmission by using transmission mode 2;

in a case where $K_{Threshold1} < K < K_{Threshold2}$, perform the retransmission by using transmission mode 3;

and so on.

Taking an example in which the first reference information includes the transmission duration of the first message, in a case where there are a plurality of transmission duration thresholds (including $T_{Threshold0}$, $T_{Threshold1}$, $T_{Threshold2}$, etc.), the transmission mode used for the retransmission may be determined according to a relationship between the transmission duration $T$ and the plurality of thresholds, e.g., according to a correspondence between the transmission duration $T$ and a plurality of value ranges determined based on the plurality of thresholds:

in a case where $T > T_{Threshold0}$, perform the retransmission by using transmission mode 1 (optionally, using the same first transmission mode as that for the initial transmission);

in a case where $T_{Threshold0} < T < T_{Threshold1}$, perform the retransmission by using transmission mode 2;

in a case where $T_{Threshold1} < T < T_{Threshold2}$, perform the retransmission by using transmission mode 3;

and so on.

In some embodiments, the above-mentioned transmission method may also include: determining, by the first terminal, the second transmission mode based on the number of retransmissions of the first message, from a plurality of transmission modes corresponding to a plurality of retransmission numbers respectively.

That is, different numbers of retransmissions may be associated with different transmission modes, or each retransmission may be associated with a different transmission mode, and in this way, in a certain retransmission, based on this association relationship, it may be determined that the second transmission mode is used for the current retransmission. For example, each retransmission is associated with a different value of some parameter(s) in the transmission mode. In this way, the different transmission mode may be used in each retransmission, thereby improving the probability of the correct transmission.

In some embodiments, the above-mentioned transmission method may further include: determining, by the first terminal, the second transmission mode based on a time window in which the transmission duration of the first message is located, from a plurality of transmission modes corresponding to a plurality of preset time windows respectively.

That is, different time windows are associated with different transmission modes, so that in a certain retransmission, based on this association relationship, it may be determined that the second transmission mode is used for the current retransmission. For example, the first transmission mode is used within a first time window, and the second transmission mode is used outside the first time window. The lengths of the plurality of time windows may be the same or different. According to this implementation, the transmission modes within different time windows may be flexibly set.

In some embodiments, the second transmission mode, or the transmission mode used for the retransmission of the first message, may be determined based on scheduling/indication of a network device. Specifically, the second transmission mode may be determined based on fifth indication information sent from the network, that is, the transmission method also includes: sending, by the network device, fifth indication information to the first terminal; where the fifth indication information is used to indicate the second transmission mode.

Optionally, the fifth indication information may be configuration information issued by the network device in the process of the transmission of the first message, and for example, the fifth indication information may be the fourth indication information carried in the second message sent from the network device in the aforementioned embodiments. Alternatively, the fifth indication information may be configuration information pre-issued from the network device, such as configuration information issued before the initial transmission of the first message.

In some embodiments, the fifth indication information is used to indicate the second transmission mode from a plurality of preconfigured transmission modes.

Exemplarily, the plurality of transmission modes are preconfigured by means of a preconfiguration, a protocol specification, a network-semi-static configuration, etc., and the fifth indication information is used to indicate the second transmission mode from the plurality of transmission modes. In some embodiments, different transmission modes correspond to different index values, and the fifth indication information is used to indicate an index value of the second transmission mode.

Exemplarily, the fifth indication information is used to indicate a parameter in the second transmission mode. That is, the fifth indication information indicates the second transmission mode by directly indicating the parameter.

It can be seen that, according to the embodiments of the present disclosure, in a case where the message sending fails, a retransmission is required, and the retransmission may be performed by using a transmission mode different from that of the initial transmission, based on a preset rule, to improve the probability of a correct data transmission when retransmitting, thereby achieving the purpose of improving data transmission performance. In a case where the first terminal includes a zero-power consumption device or an Ambient IoT device, the data transmission performance may be improved without improving the requirements for the first terminal.

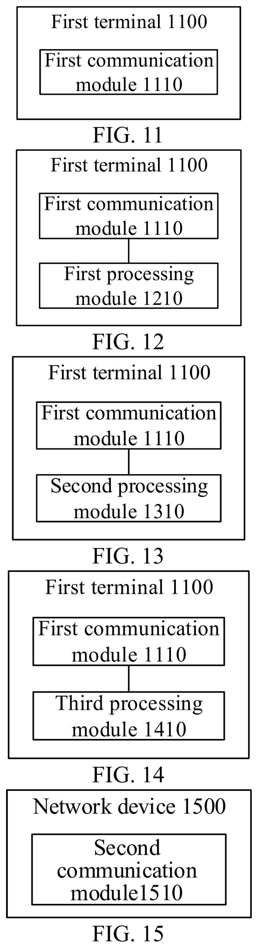

FIG. 11 is a schematic block diagram of a first terminal 1100 according to an embodiment of the present disclosure. The first terminal 1100 may include:

a first communication module 1110, configured to, after performing an initial transmission of a first message by using a first transmission mode, retransmit the first message by using a second transmission mode; where the second transmission mode is different from the first transmission mode.

In an implementation, the second transmission mode being different from the first transmission mode, includes:

a signal transmission mode in the second transmission mode is different from a signal transmission mode in the first transmission mode; and/or
a transmission configuration in the second transmission mode is different from a transmission configuration in the first transmission mode.

In an implementation, the signal transmission mode includes an active transmission mode and/or a backscatter mode.

In an implementation, the transmission configuration includes at least one of: transmission power; a transmission beam; a frequency-domain resource configuration; a time-domain resource configuration; a modulation mode; an encoding mode; a waveform; an encoding configuration; or a spreading configuration.

In an implementation, the frequency-domain resource configuration includes positions of frequency-domain resources and/or a number of the frequency-domain resources.

In an implementation, the time-domain resource configuration includes at least one of: a number of time-domain resources; a length of time-domain resources; a time-domain length of single-bit data; or a time-domain length of a single modulated symbol.

In an implementation, the encoding configuration includes at least one of: a code rate; a code length; a chip length; or a number of chips in single-bit data.

In an implementation, the spreading configuration includes a spreading factor and/or a spreading sequence.

In an implementation, retransmitting the first message is triggered in a case where a first condition is satisfied.

In an implementation, the first condition includes at least one of:

a response message for the first message being not received at a first time window or a first time-domain position after transmitting the first message;
a second message being received at a second time window or a second time-domain position after transmitting the first message; where the second message is used to indicate to retransmit the first message;
the first message transmitted colliding with a third message sent from a second terminal; or
strength of a first signal received from a network device being lower than a first threshold.

In an implementation, the response message includes at least one of:

an acknowledgement message for the first message;
first indication information, the first indication information being used to schedule a data transmission; or
a fourth message, a transmission of which is triggered by the first message.

In an implementation, a position of the first time window or the first time-domain position is determined based on time of transmitting the first message and first time-domain offset information.

In an implementation, the first time-domain offset information is pre-specified or configured by a network device.

In an implementation, a length of the first time window is pre-specified or configured by a network device.

In an implementation, the second message includes at least one of:

a negative acknowledgement message for the first message;
second indication information, the second indication information being used to indicate to retransmit the first message;
third indication information, the third indication information being used to indicate that a type of data to be transmitted is scheduled to be retransmission data; or
fourth indication information, the fourth indication information being used to indicate a transmission mode for retransmitting the first message.

In an implementation, a position of the second time window or the second time-domain position is determined based on time of transmitting the first message and second time-domain offset information.

In an implementation, the second time-domain offset information is pre-specified or configured by a network device.

In an implementation, a length of the second time window is pre-specified or configured by a network device.

In an implementation, the second transmission mode is determined based on first reference information, and the first reference information includes at least one of:

strength of a second signal received from a network device;
a number of retransmissions of the first message; or
a transmission duration of the first message.

In an implementation, the first communication module 1110 is further configured to:
retransmit the first message by using the second transmission mode different from the first transmission mode, in a case where the first reference information satisfies a second condition.

In an implementation, the first communication module 1110 is further configured to:
retransmit the first message by using the first transmission mode, in a case where the first reference information does not satisfy the second condition.

In an implementation, the second condition includes at least one of:

strength of the second signal being less than a second threshold;
a number of retransmissions of the first message being greater than a third threshold; or
a transmission duration of the first message being greater than a fourth threshold.

In an implementation, each retransmission of multiple retransmissions of the first message uses the second transmission mode, in a case where the first reference information satisfies the second condition.

In an implementation, different transmission modes are used for at least some retransmissions of multiple retransmissions of the first message, in a case where the first reference information satisfies the second condition.

In an implementation, as shown in FIG. 12, the first terminal 1100 further includes a first processing module 1210, configured to:
determine the second transmission mode based on an information value range corresponding to the first reference information, from a plurality of transmission modes corresponding to a plurality of information value ranges respectively.

In an implementation, the plurality of information value ranges are determined based on a plurality of thresholds, and the plurality of thresholds are pre-specified or configured by a network device.

In an implementation, as shown in FIG. 13, the first terminal 1100 further includes a second processing module 1310, configured to:
determine the second transmission mode based on the number of retransmissions of the first message, from a plurality of transmission modes corresponding to a plurality of retransmission numbers respectively.

In an implementation, as shown in FIG. 14, the first terminal 1100 further includes a third processing module 1410, configured to:
determine the second transmission mode based on a time window in which the transmission duration of the first message is located, from a plurality of transmission modes corresponding to a plurality of preset time windows respectively.

In an implementation, the second transmission mode is determined based on fifth indication information sent from a network device.

In an implementation, the fifth indication information is used to indicate the second transmission mode from a plurality of preconfigured transmission modes.

In an implementation, the fifth indication information is used to indicate an index value of the second transmission mode.

In an implementation, the fifth indication information is used to indicate a parameter in the second transmission mode.

The first terminal 1100 of the embodiments of the present disclosure can implement the corresponding functions of the first terminal in the aforementioned method embodiments. The procedures, functions, implementations, and beneficial effects corresponding to each module (submodule, unit, or component, etc.) in the first terminal 1100 may refer to the corresponding description in the above-mentioned method embodiments and are not repeated here. It should be noted that the functions described regrading each module (submodule, unit, or component, etc.) in the first terminal 1100 in the embodiments of the present disclosure may be implemented by different modules (submodules, units, or components, etc.) or by a same module (submodule, unit, or component, etc.).

FIG. 15 is a schematic block diagram of a network device 1500 according to an embodiment of the present disclosure. The network device 1500 may include:
a second communication module 1510, configured to receive, after receiving an initial transmission of a first message from a first terminal using a first transmission mode, a retransmission of the first message from the first terminal using a second transmission mode; where the second transmission mode is different from the first transmission mode.

In an implementation, the second communication module 1510 is further configured to:

send a response message to the first terminal at a first time window or a first time-domain position, in a case of receiving the first message correctly.

In an implementation, the response message includes at least one of:

an acknowledgement message for the first message;

first indication information, the first indication information being used to schedule a data transmission of the first terminal; or

a fourth message, a transmission of which is triggered by the first message.

In an implementation, a position of the first time window or the first time-domain position is determined based on time of receiving the first message and first time-domain offset information.

In an implementation, the first time-domain offset information is pre-specified or configured by the network device 1500.

In an implementation, a length of the first time window is pre-specified or configured by the network device 1500.

In an implementation, the second communication module 1510 is further configured to:

send a second message to the first terminal at a second time window or a second time-domain position, in a case where the first message is not received correctly; where the second message is used to indicate to the first terminal to retransmit the first message.

In an implementation, the second message includes at least one of:

a negative acknowledgement message for the first message;

second indication information, the second indication information being used to indicate the first terminal to retransmit the first message;

third indication information, the third indication information being used to indicate that a type of data to be transmitted by the first terminal is scheduled to be retransmission data; or

fourth indication information, the fourth indication information being used to indicate a transmission mode for retransmitting the first message.

In an implementation, a position of the second time window or the second time-domain position is determined based on time of receiving the first message and second time-domain offset information.

In an implementation, the second time-domain offset information is pre-specified or configured by the network device 1500.

In an implementation, a length of the second time window is pre-specified or configured by the network device 1500.

In an implementation, the second communication module 1510 is further configured to:

send fifth indication information to the first terminal; where the fifth indication information is used to indicate the second transmission mode.

In an implementation, the fifth indication information is used to indicate the second transmission mode from a plurality of preconfigured transmission modes.

In an implementation, the fifth indication information is used to indicate an index value of the second transmission mode.

In an implementation, the fifth indication information is used to indicate a parameter in the second transmission mode.

The network device 1500 of the embodiments of the present disclosure can implement the corresponding functions of the network device in the aforementioned method embodiments. The procedures, functions, implementations, and beneficial effects corresponding to each module (submodule, unit, or component, etc.) in the network device 1500 may refer to the corresponding description in the above-mentioned method embodiments and are not repeated here. It should be noted that the functions described regrading each module (submodule, unit, or component, etc.) in the network device 1500 in the embodiments of the present disclosure may be implemented by different modules (submodules, units, or components, etc.) or by a same module (submodule, unit, or component, etc.)

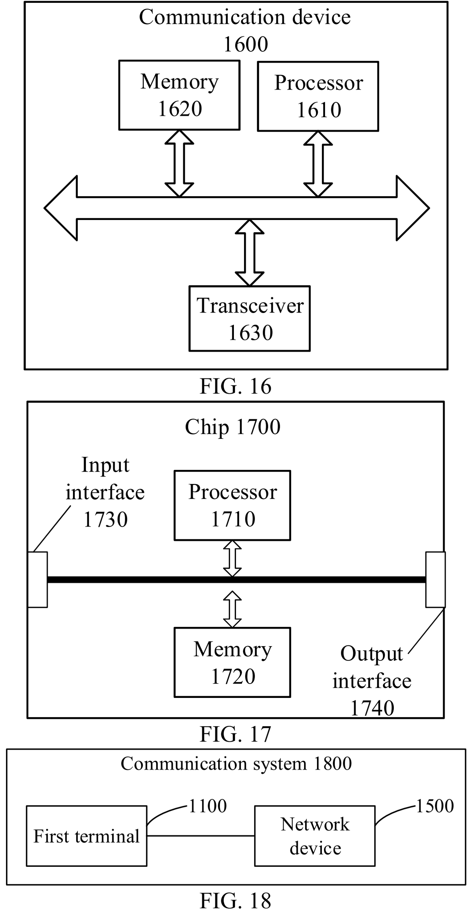

FIG. 16 is a schematic structural diagram of a communication device 1600 according to the embodiments of the present disclosure. The communication device 1600 includes a processor 1610, and the processor 1610 may call a computer program from a memory and run the computer program, to cause the communication device 1600 to implement the methods in the embodiments of the present application.

In an implementation, the communication device 1600 may further include a memory 1620. Herein, the processor 1610 may call a computer program from the memory 1620 and run the computer program, to cause the communication device 1600 to implement the methods in the embodiments of the present application.

Herein, the memory 1620 may be a separate device independent of the processor 1610, or may be integrated into the processor 1610.

In an implementation, the communication device 1600 may further include a transceiver 1630, and the processor 1610 may control the transceiver 1630 to communicate with other devices, and specifically, may control the transceiver 1630 to transmit information or data to other devices, or receive information or data transmitted by other devices.

Herein, the transceiver 1630 may include a transmitter and a receiver. The transceiver 1630 may further include an antenna (antennas), and the number of antennas may be one or more.

In an implementation, the communication device 1600 may be the first terminal of the embodiments of the present application, and the communication device 1600 may implement the corresponding procedures implemented by the first terminal in various methods of the embodiments of the present application, which will not be repeated here for the sake of brevity.

In a possible implementation, the communication device 1600 may be the network device of the embodiments of the present application, and the communication device 1600 may implement the corresponding procedures implemented by the network device in various methods of the embodiments of the present application, which will not be repeated here for the sake of brevity.

FIG. 17 is a schematic structural diagram of a chip 1700 according to the embodiments of the present application. The chip 1700 includes a processor 1710, and the processor 1710 may call a computer program from a memory and run the computer program, to implement the methods in the embodiments of the present application.

In an implementation, the chip 1700 may further include a memory 1720. Herein, the processor 1710 may call a computer program from the memory 1720 and run the computer program, to implement the method performed by the first terminal in the embodiments of the present application.

Herein, the memory 1720 may be a separate device independent of the processor 1710, or may be integrated into the processor 1710.

In an implementation, the chip 1700 may further include an input interface 1730. Herein, the processor 1710 may control the input interface 1730 to communicate with other devices or chips, and specifically, may control the input interface 1730 to acquire information or data transmitted by other devices or chips.

In an implementation, the chip 1700 may further include an output interface 1740. Herein, the processor 1710 may control the output interface 1740 to communicate with other devices or chips, and specifically, may control the output interface 1740 to output information or data to other devices or chips.

In an implementation, the chip may be applied to the first terminal in the embodiments of the present application, and the chip may implement the corresponding procedures implemented by the first terminal in various method of the embodiments of the present application, which will not be repeated here for the sake of brevity.

In an implementation, the chip may be applied to the network device in the embodiments of the present application, and the chip may implement the corresponding procedures implemented by the network device in various method of the embodiments of the present application, which will not be repeated here for the sake of brevity.

It should be understood that the chip mentioned in the embodiments of the present application may also be referred to as a system-level chip, a system chip, a chip system, a system-on-chip, or the like.

The processor mentioned above may be a general-purpose processor, a digital signal processor (DSP), a field programmable gate array (FPGA), an application-specific integrated circuit (ASIC) or other programmable logic devices, transistor logic devices, discrete hardware components, etc. Herein, the general-purpose processor mentioned above may be a microprocessor or any conventional processor, etc.

The memory mentioned above may be a volatile (transitory) memory or a non-volatile (non-transitory) memory, or may include both the volatile memory and non-volatile memory. Herein, the non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM).

It should be understood that the aforementioned memory is exemplary but not a limited illustration. For example, the memory in the embodiments of the present application may also be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct Rambus random access memory (Direct Rambus RAM, DR RAM), etc. That is, the memory in the embodiments of the present application is intended to include, but not limited to, these and any other suitable types of memories.

FIG. 18 is a schematic block diagram of a communication system 1800 according to the embodiments of the present disclosure. The communication system 1800 includes a first terminal 1100 and a network device 1500.

The first terminal 1100 is configured to retransmit, after performing an initial transmission of a first message by using a first transmission mode, the first message by using a second transmission mode; where the second transmission mode is different from the first transmission mode.

The network device 1500 is configured to receive, after receiving an initial transmission of a first message from a first terminal using a first transmission mode, a retransmission of the first message from the first terminal using a second transmission mode.

The above embodiments, in whole or in part, may be implemented by software, hardware, firmware or any combination thereof. When implemented by using software, they, in whole or in part, may be implemented in the form of a computer program product. The computer program product includes one or more computer instructions. When the computer program instructions are loaded and performed on a computer, the procedures or functions according to the embodiments of the present application are generated in whole or in part. The computer may be a general-purpose computer, a special-purpose computer, a computer network, or other programmable apparatus. The computer instructions may be stored in a computer-readable storage medium, or transmitted from one computer-readable storage medium to another computer-readable storage medium. For example, the computer instructions may be transmitted from a website, a computer, a server, or a data center to another website, computer, server, or data center in a wired (e.g., coaxial cable, optical fiber, digital subscriber line (DSL)) or wireless (e.g., infrared, radio, microwave, or the like.) manner. The computer-readable storage medium may be any available medium that can be accessed by a computer, or a data storage device such as a server or a data center that includes one or more available media integrated therein. The available medium may be a magnetic medium (e.g., a floppy disk, a hard disk, a magnetic tape), an optical medium (e.g., a Digital Video Disk (DVD)), or a semiconductor medium (e.g., a solid state disk (SSD)), etc.

It should be understood that in the various embodiments of the present application, the sizes of the sequence numbers of the aforementioned processes do not mean the order of execution. The order of execution of the aforementioned various processes should be determined by their functions and internal logics, and shall not constitute any limitation on the implementation process of the embodiments of the present application.

Those skilled in the art may clearly understand that for the convenience and brevity of the description, the specific operating processes of the system, apparatus and unit described above may refer to the corresponding processes in the aforementioned method embodiments, which will not be repeated here.

The foregoing descriptions are merely specific implementations of the present application, but the protection scope of the present application is not limited thereto. Any skilled person in the art could readily conceive of changes or replacements within the technical scope disclosed in the present application, which shall be all included within the protection scope of the present application. Therefore, the protection scope of the present application shall be on the basis of the protection scope of the claims.

**Claims**

1. A transmission method, comprising:
   retransmitting, by a first terminal after performing an initial transmission of a first message by using a first transmission mode, the first message by using a second transmission mode; wherein the second transmission mode is different from the first transmission mode.

2. The method according to claim 1, wherein the second transmission mode being different from the first transmission mode, comprises:

   a signal transmission mode in the second transmission mode is different from a signal transmission mode in the first transmission mode; and/or
   a transmission configuration in the second transmission mode is different from a transmission configuration in the first transmission mode.

3. The method according to claim 2, wherein the signal transmission mode comprises an active transmission mode and/or a backscatter mode.

4. The method according to claim 2 or 3, wherein the transmission configuration comprises at least one of:

   transmission power;
   a transmission beam;
   a frequency-domain resource configuration;
   a time-domain resource configuration;

a modulation mode;
an encoding mode;
a waveform;
an encoding configuration; or
a spreading configuration.

5. The method according to claim 4, wherein the frequency-domain resource configuration comprises positions of frequency-domain resources and/or a number of the frequency-domain resources.

6. The method according to claim 4 or 5, wherein the time-domain resource configuration comprises at least one of:

a number of time-domain resources;
a length of time-domain resources;
a time-domain length of single-bit data; or
a time-domain length of a single modulated symbol.

7. The method according to any one of claims 4 to 6, wherein the encoding configuration comprises at least one of:

a code rate;
a code length;
a chip length; or
a number of chips in single-bit data.

8. The method according to any one of claims 4 to 7, wherein the spreading configuration comprises a spreading factor and/or a spreading sequence.

9. The method according to any one of claims 1 to 8, wherein retransmitting the first message is triggered in a case where a first condition is satisfied.

10. The method according to claim 9, wherein the first condition comprises at least one of:

a response message for the first message being not received by the first terminal at a first time window or a first time-domain position after transmitting the first message;
a second message being received by the first terminal at a second time window or a second time-domain position after transmitting the first message; wherein the second message is used to indicate the first terminal to retransmit the first message;
the first message transmitted by the first terminal colliding with a third message sent from a second terminal; or
strength of a first signal received by the first terminal from a network device being lower than a first threshold.

11. The method according to claim 10, wherein the response message comprises at least one of:

an acknowledgement message for the first message;
first indication information, the first indication information being used to schedule a data transmission of the first terminal; or
a fourth message, a transmission of which is triggered by the first message.

12. The method according to claim 10 or 11, wherein a position of the first time window or the first time-domain position is determined based on time of transmitting the first message and first time-domain offset information.

13. The method according to claim 12, wherein the first time-domain offset information is pre-specified or configured by a network device.

14. The method according to any one of claims 10 to 13, wherein a length of the first time window is pre-specified or configured by a network device.

15. The method according to any one of claims 10 to 14, wherein the second message comprises at least one of:

a negative acknowledgement message for the first message;

second indication information, the second indication information being used to indicate the first terminal to retransmit the first message;

third indication information, the third indication information being used to indicate that a type of data to be transmitted by the first terminal is scheduled to be retransmission data; or

fourth indication information, the fourth indication information being used to indicate a transmission mode for retransmitting the first message.

16. The method according to any one of claims 10 to 15, wherein a position of the second time window or the second time-domain position is determined based on time of transmitting the first message and second time-domain offset information.

17. The method according to claim 16, wherein the second time-domain offset information is pre-specified or configured by a network device.

18. The method according to any one of claims 10 to 17, wherein a length of the second time window is pre-specified or configured by a network device.

19. The method according to any one of claims 1 to 18, wherein the second transmission mode is determined based on first reference information, and the first reference information comprises at least one of:

strength of a second signal received by the first terminal from a network device;
a number of retransmissions of the first message; or
a transmission duration of the first message.

20. The method according to claim 19, wherein retransmitting the first message by using the second transmission mode, comprises:
retransmitting, by the first terminal, the first message by using the second transmission mode different from the first transmission mode, in a case where the first reference information satisfies a second condition.

21. The method according to claim 20, wherein the method further comprises:
retransmitting, by the first terminal, the first message by using the first transmission mode, in a case where the first reference information does not satisfy the second condition.

22. The method according to claim 20 or 21, wherein the second condition comprises at least one of:

strength of the second signal being less than a second threshold;
a number of retransmissions of the first message being greater than a third threshold; or
a transmission duration of the first message being greater than a fourth threshold.

23. The method according to any one of claims 20 to 22, wherein each retransmission of multiple retransmissions of the first message uses the second transmission mode, in a case where the first reference information satisfies the second condition.

24. The method according to any one of claims 20 to 22, wherein different transmission modes are used for at least some retransmissions of multiple retransmissions of the first message, in a case where the first reference information satisfies the second condition.

25. The method according to claim 19, wherein the method further comprises:
determining, by the first terminal, the second transmission mode based on an information value range corresponding to the first reference information, from a plurality of transmission modes corresponding to a plurality of information value ranges respectively.

26. The method according to claim 25, wherein the plurality of information value ranges are determined based on a plurality of thresholds, and the plurality of thresholds are pre-specified or configured by a network device.

27. The method according to claim 19, wherein the method further comprises:
determining, by the first terminal, the second transmission mode based on the number of retransmissions of the first message, from a plurality of transmission modes corresponding to a plurality of retransmission numbers respectively.

**28.** The method according to claim 19, wherein the method further comprises:
determining, by the first terminal, the second transmission mode based on a time window in which the transmission duration of the first message is located, from a plurality of transmission modes corresponding to a plurality of preset time windows respectively.

**29.** The method according to any one of claims 1 to 18, wherein the second transmission mode is determined based on fifth indication information sent from a network device.

**30.** The method according to claim 29, wherein the fifth indication information is used to indicate the second transmission mode from a plurality of preconfigured transmission modes.

**31.** The method according to claim 30, wherein the fifth indication information is used to indicate an index value of the second transmission mode.

**32.** The method according to claim 29, wherein the fifth indication information is used to indicate a parameter in the second transmission mode.

**33.** A transmission method, comprising:
receiving, by a network device after receiving an initial transmission of a first message from a first terminal using a first transmission mode, a retransmission of the first message from the first terminal using a second transmission mode; wherein the second transmission mode is different from the first transmission mode.

**34.** The method according to claim 33, wherein the method further comprises:
sending, by the network device, a response message to the first terminal at a first time window or a first time-domain position, in a case of receiving the first message correctly.

**35.** The method according to claim 34, wherein the response message comprises at least one of:

an acknowledgement message for the first message;
first indication information, the first indication information being used to schedule a data transmission of the first terminal; or
a fourth message, a transmission of which is triggered by the first message.

**36.** The method according to claim 34 or 35, wherein a position of the first time window or the first time-domain position is determined based on time of receiving the first message and first time-domain offset information.

**37.** The method according to claim 36, wherein the first time-domain offset information is pre-specified or configured by the network device.

**38.** The method according to any one of claims 34 to 37, wherein a length of the first time window is pre-specified or configured by the network device.

**39.** The method according to any one of claims 33 to 38, wherein the method further comprises:
sending, by the network device, a second message to the first terminal at a second time window or a second time-domain position, in a case where the first message is not received correctly; wherein the second message is used to indicate to the first terminal to retransmit the first message.

**40.** The method according to claim 39, wherein the second message comprises at least one of:

a negative acknowledgement message for the first message;
second indication information, the second indication information being used to indicate the first terminal to retransmit the first message;
third indication information, the third indication information being used to indicate that a type of data to be transmitted by the first terminal is scheduled to be retransmission data; or
fourth indication information, the fourth indication information being used to indicate a transmission mode for retransmitting the first message.

**41.** The method according to claim 39 or 40, wherein a position of the second time window or the second time-domain position is determined based on time of receiving the first message and second time-domain offset information.

42. The method according to claim 41, wherein the second time-domain offset information is pre-specified or configured by the network device.

43. The method according to any one of claims 39 to 41, wherein a length of the second time window is pre-specified or configured by the network device.

44. The method according to any one of claims 33 to 43, wherein the method further comprises:
sending, by the network device, fifth indication information to the first terminal; wherein the fifth indication information is used to indicate the second transmission mode.

45. The method according to claim 44, wherein the fifth indication information is used to indicate the second transmission mode from a plurality of preconfigured transmission modes.

46. The method according to claim 45, wherein the fifth indication information is used to indicate an index value of the second transmission mode.

47. The method according to claim 44, wherein the fifth indication information is used to indicate a parameter in the second transmission mode.

48. A first terminal, comprising:
a first communication module, configured to, after performing an initial transmission of a first message by using a first transmission mode, retransmit the first message by using a second transmission mode; wherein the second transmission mode is different from the first transmission mode.

49. The first terminal according to claim 48, wherein the second transmission mode being different from the first transmission mode, comprises:

a signal transmission mode in the second transmission mode is different from a signal transmission mode in the first transmission mode; and/or
a transmission configuration in the second transmission mode is different from a transmission configuration in the first transmission mode.

50. The first terminal according to claim 49, wherein the signal transmission mode comprises an active transmission mode and/or a backscatter mode.

51. The first terminal according to claim 49 or 50, wherein the transmission configuration comprises at least one of:

transmission power;
a transmission beam;
a frequency-domain resource configuration;
a time-domain resource configuration;
a modulation mode;
an encoding mode;
a waveform;
an encoding configuration; or
a spreading configuration.

52. The first terminal according to claim 51, wherein the frequency-domain resource configuration comprises positions of frequency-domain resources and/or a number of the frequency-domain resources.

53. The first terminal according to claim 51 or 52, wherein the time-domain resource configuration comprises at least one of:

a number of time-domain resources;
a length of time-domain resources;
a time-domain length of single-bit data; or

a time-domain length of a single modulated symbol.

54. The first terminal according to any one of claims 51 to 53, wherein the encoding configuration comprises at least one of:

a code rate;
a code length;
a chip length; or
a number of chips in single-bit data.

55. The first terminal according to any one of claims 51 to 54, wherein the spreading configuration comprises a spreading factor and/or a spreading sequence.

56. The first terminal according to any one of claims 48 to 55, wherein retransmitting the first message is triggered in a case where a first condition is satisfied.

57. The first terminal according to claim 56, wherein the first condition comprises at least one of:

a response message for the first message being not received at a first time window or a first time-domain position after transmitting the first message;
a second message being received at a second time window or a second time-domain position after transmitting the first message; wherein the second message is used to indicate to retransmit the first message;
the first message transmitted colliding with a third message sent from a second terminal; or
strength of a first signal received from a network device being lower than a first threshold.

58. The first terminal according to claim 57, wherein the response message comprises at least one of:

an acknowledgement message for the first message;
first indication information, the first indication information being used to schedule a data transmission; or
a fourth message, a transmission of which is triggered by the first message.

59. The first terminal according to claim 57 or 58, wherein a position of the first time window or the first time-domain position is determined based on time of transmitting the first message and first time-domain offset information.

60. The first terminal according to claim 59, wherein the first time-domain offset information is pre-specified or configured by a network device.

61. The first terminal according to any one of claims 57 to 60, wherein a length of the first time window is pre-specified or configured by a network device.

62. The first terminal according to any one of claims 57 to 61, wherein the second message comprises at least one of:

a negative acknowledgement message for the first message;
second indication information, the second indication information being used to indicate to retransmit the first message;
third indication information, the third indication information being used to indicate that a type of data to be transmitted is scheduled to be retransmission data; or
fourth indication information, the fourth indication information being used to indicate a transmission mode for retransmitting the first message.

63. The first terminal according to any one of claims 57 to 62, wherein a position of the second time window or the second time-domain position is determined based on time of transmitting the first message and second time-domain offset information.

64. The first terminal according to claim 63, wherein the second time-domain offset information is pre-specified or configured by a network device.

65. The first terminal according to any one of claims 57 to 64, wherein a length of the second time window is pre-specified or configured by a network device.

66. The first terminal according to any one of claims 48 to 65, wherein the second transmission mode is determined based on first reference information, and the first reference information comprises at least one of:

strength of a second signal received from a network device;
a number of retransmissions of the first message; or
a transmission duration of the first message.

67. The first terminal according to claim 66, wherein the first communication module is further configured to:
retransmit the first message by using the second transmission mode different from the first transmission mode, in a case where the first reference information satisfies a second condition.

68. The first terminal according to claim 67, wherein the first communication module is further configured to:
retransmit the first message by using the first transmission mode, in a case where the first reference information does not satisfy the second condition.

69. The first terminal according to claim 67 or 68, wherein the second condition comprises at least one of:

strength of the second signal being less than a second threshold;
a number of retransmissions of the first message being greater than a third threshold; or
a transmission duration of the first message being greater than a fourth threshold.

70. The first terminal according to any one of claims 67 to 69, wherein each retransmission of multiple retransmissions of the first message uses the second transmission mode, in a case where the first reference information satisfies the second condition.

71. The first terminal according to any one of claims 67 to 69, wherein different transmission modes are used for at least some retransmissions of multiple retransmissions of the first message, in a case where the first reference information satisfies the second condition.

72. The first terminal according to claim 66, wherein the first terminal further comprises a first processing module, configured to:
determine the second transmission mode based on an information value range corresponding to the first reference information, from a plurality of transmission modes corresponding to a plurality of information value ranges respectively.

73. The first terminal according to claim 72, wherein the plurality of information value ranges are determined based on a plurality of thresholds, and the plurality of thresholds are pre-specified or configured by a network device.

74. The first terminal according to claim 66, wherein the first terminal further comprises a second processing module, configured to:
determine the second transmission mode based on the number of retransmissions of the first message, from a plurality of transmission modes corresponding to a plurality of retransmission numbers respectively.

75. The first terminal according to claim 66, wherein the first terminal further comprises a third processing module, configured to:
determine the second transmission mode based on a time window in which the transmission duration of the first message is located, from a plurality of transmission modes corresponding to a plurality of preset time windows respectively.

76. The first terminal according to any one of claims 48 to 65, wherein the second transmission mode is determined based on fifth indication information sent from a network device.

77. The first terminal according to claim 76, wherein the fifth indication information is used to indicate the second transmission mode from a plurality of preconfigured transmission modes.

78. The first terminal according to claim 77, wherein the fifth indication information is used to indicate an index value of the second transmission mode.

79. The first terminal according to claim 76, wherein the fifth indication information is used to indicate a parameter in the second transmission mode.

80. A network device, comprising:
a second communication module, configured to receive, after receiving an initial transmission of a first message from a first terminal using a first transmission mode, a retransmission of the first message from the first terminal using a second transmission mode; wherein the second transmission mode is different from the first transmission mode.

81. The network device according to claim 80, wherein the second communication module is further configured to:
send a response message to the first terminal at a first time window or a first time-domain position, in a case of receiving the first message correctly.

82. The network device according to claim 81, wherein the response message comprises at least one of:

an acknowledgement message for the first message;
first indication information, the first indication information being used to schedule a data transmission of the first terminal; or
a fourth message, a transmission of which is triggered by the first message.

83. The network device according to claim 81 or 82, wherein a position of the first time window or the first time-domain position is determined based on time of receiving the first message and first time-domain offset information.

84. The network device according to claim 83, wherein the first time-domain offset information is pre-specified or configured by the network device.

85. The network device according to any one of claims 81 to 84, wherein a length of the first time window is pre-specified or configured by the network device.

86. The network device according to any one of claims 80 to 85, wherein the second communication module is further configured to:
send a second message to the first terminal at a second time window or a second time-domain position, in a case where the first message is not received correctly; wherein the second message is used to indicate to the first terminal to retransmit the first message.

87. The network device according to claim 86, wherein the second message comprises at least one of:

a negative acknowledgement message for the first message;
second indication information, the second indication information being used to indicate the first terminal to retransmit the first message;
third indication information, the third indication information being used to indicate that a type of data to be transmitted by the first terminal is scheduled to be retransmission data; or
fourth indication information, the fourth indication information being used to indicate a transmission mode for retransmitting the first message.

88. The network device according to claim 86 or 87, wherein a position of the second time window or the second time-domain position is determined based on time of receiving the first message and second time-domain offset information.

89. The network device according to claim 88, wherein the second time-domain offset information is pre-specified or configured by the network device.

90. The network device according to any one of claims 86 to 89, wherein a length of the second time window is pre-specified or configured by the network device.

91. The network device according to any one of claims 80 to 90, wherein the second communication module is further configured to:

send fifth indication information to the first terminal; wherein the fifth indication information is used to indicate the second transmission mode.

92. The network device according to claim 91, wherein the fifth indication information is used to indicate the second transmission mode from a plurality of preconfigured transmission modes.

93. The network device according to claim 92, wherein the fifth indication information is used to indicate an index value of the second transmission mode.

94. The network device according to claim 91, wherein the fifth indication information is used to indicate a parameter in the second transmission mode.

95. A first terminal, comprising: a processor and a memory, wherein the memory is configured to store a computer program, the processor is configured to call and run the computer program stored in the memory, so that the first terminal performs the method according to any one of claims 1 to 32.

96. A network device comprising: a processor and a memory, wherein the memory is configured to store a computer program, the processor is configured to call and run the computer program stored in the memory, so that the network device performs the method according to any one of claims 33 to 47.

97. A chip comprising: a processor configured to call and run a computer program from a memory, so that a device equipped with the chip performs the method according to any one of claims 1 to 47.

98. A computer-readable storage medium, configured to store a computer program, wherein the computer program, when being run by a device, causes the device to perform the method according to any one of claims 1 to 47.

99. A computer program product, comprising computer program instructions, wherein the computer program instructions cause a computer to perform the method according to any one of claims 1 to 47.

100.
A computer program, wherein the computer program causes a computer to perform the method according to any one of claims 1 to 47.

101.
A communication system, comprising:

a first terminal, configured to perform the method according to any one of claims 1 to 32;
a network device, configured to perform the method according to any one of claims 33 to 47.

FIG. 1

FIG. 2

FIG. 3

**Network device**

TX — AMP

**Carrier**

**Zero-power consumption terminal**

Logic processing | Power harvesting

RX — LNA

**Backscatter signal**

## FIG. 4

$R_2$ | $R_3$

Binary coding

$L_2$ | $L_1$ | $C_1$ | $R_L$ | S

$C_2$

## FIG. 5

Power climb counter

Beam direction

Climb | Climb | Unchanged | Climb

Initial transmission | First retransmission | Second retransmission | Third retransmission | Fourth retransmission

## FIG. 6

A first terminal after performing an initial transmission of a first message by using a first transmission mode, retransmits the first message by using a second transmission mode

S710

## FIG. 7

A network device after receiving an initial transmission of a first message from a first terminal using a first transmission mode, receives a retransmission of the first message from the first terminal using a second transmission mode

S810

## FIG. 8

First time window for the first terminal to listen to the response message

First Message

First time-domain offset information

Response Message

The first terminal sends a first message

## FIG. 9A

First time-domain position for the first terminal to listen to the response message

First message

First time-domain offset information

Response message

The first terminal sends a first message

## FIG. 9B

First time window for the first terminal to listen to the response message

First Message

First time-domain offset information

Response Message

First Message

The first terminal sends a first message

The first terminal retransmits the first message

## FIG. 9C

First time-domain position for the first terminal to listen to the response message

First message

First time-domain offset information

Response message

First message

The first terminal sends a first message

The first terminal retransmits the first message

## FIG. 9D

Second time window for the first terminal to listen to the second message

First mess-age

Second time-domain offset information

Seco-nd mess-age

The first terminal sends a first message

## FIG. 10A

Second time-domain position for the first terminal to listen to the second message

First mess-age

Second time-domain offset information

Seco-nd mess-age

The first terminal sends a first message

## FIG. 10B

Second time window for the first terminal to listen to the second message

First Mess-age

Second time-domain offset information

Seco-nd Mess-age

First Mess-age

The first terminal sends a first message

The first terminal retransmits the first message

## FIG. 10C

Second time-domain position for the first terminal to listen to the second message

First mess-age

Second time-domain offset information

Seco-nd mess-age

First mess-age

The first terminal sends a first message

The first terminal retransmits the first message

## FIG. 10D

First terminal 1100

First communication
module 1110

FIG. 11

First terminal 1100

First communication
module 1110

First processing
module 1210

FIG. 12

First terminal 1100

First communication
module 1110

Second processing
module 1310

FIG. 13

First terminal 1100

First communication
module 1110

Third processing
module 1410

FIG. 14

Network device 1500

Second
communication
module1510

FIG. 15

Communication device
1600

Memory
1620

Processor
1610

Transceiver
1630

FIG. 16

Chip 1700

Input
interface
1730

Processor
1710

Memory
1720

Output
interface
1740

FIG. 17

Communication system 1800

First terminal — 1100

Network
device — 1500

FIG. 18

## INTERNATIONAL SEARCH REPORT

| International application No. |
|---|
| **PCT/CN2023/105058** |

| A. | CLASSIFICATION OF SUBJECT MATTER |
|---|---|

H04L1/08(2006.01)i

According to International Patent Classification (IPC) or to both national classification and IPC

| B. | FIELDS SEARCHED |
|---|---|

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

3GPP, CNKI, CNTXT, ENTXTC, VEN: 初传, 传输方式, 配置, 重传, 功率, 波束, 调制, retransmission, configuration, power, beam, MCS

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023004583 A1 (GUANGDONG OPPO MOBILE COMMUNICATIONS CO., LTD.) 02 February 2023 (2023-02-02)<br>description, page 3 line 19-page 15 line 10, and figures 1-17 | 1-101 |
| X | CN 115968034 A (WEIWO SOFTWARE TECHNOLOGY CO., LTD.) 14 April 2023 (2023-04-14)<br>description, paragraphs [0058]-[0206] | 1-101 |
| A | CN 109906660 A (HUAWEI TECHNOLOGIES CO., LTD.) 18 June 2019 (2019-06-18)<br>entire document | 1-101 |
| A | HUAWEI et al. "Consideration on subsequent transmission/retransmission after pre-emption"<br>*3GPP TSG RAN WG1 Meeting #89, R1-1706915,* 19 May 2017 (2017-05-19),<br>entire document | 1-101 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 December 2023** | **12 December 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/105058**

| Patent document cited in search report | | | Publication date (day/month/year) | Patent family member(s) | | | Publication date (day/month/year) |
|---|---|---|---|---|---|---|---|
| WO | 2023004583 | A1 | 02 February 2023 | None | | | |
| CN | 115968034 | A | 14 April 2023 | None | | | |
| CN | 109906660 | A | 18 June 2019 | WO | 2019014988 | A1 | 24 January 2019 |

Form PCT/ISA/210 (patent family annex) (July 2022)